(19) **Europäisches Patentamt / European Patent Office / Office européen des brevets**

(11) **EP 3 502 815 A1**

(12) **EUROPEAN PATENT APPLICATION**
published in accordance with Art. 153(4) EPC

(43) Date of publication:
**26.06.2019 Bulletin 2019/26**

(21) Application number: **17852893.1**

(22) Date of filing: **12.09.2017**

(51) Int Cl.:
*G05B 19/4063* (2006.01)     *B23Q 17/22* (2006.01)
*G05B 19/18* (2006.01)

(86) International application number:
**PCT/JP2017/032869**

(87) International publication number:
**WO 2018/056116 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.09.2016 JP 2016185553**

(71) Applicant: **Otsuki, Toshiaki**
**Koganei-shi, Tokyo 184-0003 (JP)**

(72) Inventor: **Otsuki, Toshiaki**
**Koganei-shi, Tokyo 184-0003 (JP)**

(74) Representative: **Rüger Abel**
**Patentanwälte**
**Webergasse 3**
**73728 Esslingen (DE)**

(54) **NUMERICALLY CONTROLLED MACHINE TOOL MEASURING DEVICE**

(57)     Provided is a measurement device for numerically controlled machine tools that calculates continuous errors between actual positions and commanded positions, and represents or evaluates movement performance of a numerically controlled machine tool using at least two-dimensional elements of an error element and a velocity element. Provided is a measurement device for numerically controlled machine tools comprising: a path command unit which commands a commanded path to a numerical controller for movements of the machine tool; a commanded position acquisition unit which acquires commanded positions on the commanded path at discrete times or commanded positions commanded on the commanded path; an actual position acquisition unit which acquires actual positions at discrete times as a result of movements of the machine tool for the commanded path; and an error calculation unit which makes a commanded path by connecting the commanded positions and an actual path by connecting the actual positions, compares a commanded path's length and an actual path's length, calculates errors from the actual positions to the commanded path when the actual path's length is longer than the commanded path's length, and calculates errors from the commanded positions to the actual path when the commanded path's length is longer than the actual path's length.

FIG.17

**Description**

Technical Field

This invention relates to a measurement device for a numerically controlled machine tools which are controlled by numerical controllers.

Related Art

An important facet of the movement performance of a numerically controlled machine tool that is a machine tool controlled by a numerical controller (CNC: Computer Numerical Controller) is to machine a work-piece for the requested precision in as short a time as possible. Therefore, in order to measure the movement performance of a machine tool, it is desirable to machine a work-piece, to measure the machine time and to measure the precision of the work-piece. But, it is difficult to actually machine and measure a work-piece, because time, man-power and measurement machine are needed. Accordingly, without machining a work-piece, it is generally done to command a path for movement to the numerically controlled machine tool and to measure the error(error between the commanded path and the actual path obtained by the numerically controlled machine tool) and the time(movement time) or the velocity(movement velocity). Such conventional technologies are as follows:
In Japanese Patent No. 5127934, it is described that machine positions are got by twice integrating acceleration got by accelerometers attached to the axes of the machine tool and the machine positions are compensated by a profile presumed by a model or another profile got by positions detected from feedback of the axes. And, it is also described that acceleration is twice integrated only in the movement error occurrence area where the path error is supposed to occur. But, this technology has the following problems.

- The error(path error) is not gotten continuously, because the machine positions are gotten only in the movement error occurrence area where the path error is supposed to occur. The error(path error) to the commanded path is measured on the time axis. But, the error is displayed only on the time axis, and it does not have the idea that the error is displayed and evaluated on the two dimensions with error and with measurement time or measurement velocity.
- Because the machine positions are got by twice integrating the acceleration, the machine position has integration errors.
- Although the machine positions are compensated, in the case that it is compensated by a profile presumed by a model, it has further error because the profile has presumed positions. And, in the case that it is compensated by another profile got by detected positions, the interface to feedback detected positions from the numerical control is needed. In other words, this technology can not be applied to numerically controlled machine tools which don't have this interface.

In Japanese Patent No. 4676549, it is described that commanded positions and actual positions are got and the shorter distance from an actual position to a commanded path or commanded potions is calculated and displayed. But this technology has the following problems.

- Especially when a machine tool moves around an inner corner, there are cases that errors are discontinuous.
- Only the error(path error) to the commanded path is measured and displayed. Therefore, it does not have the idea that the error is displayed and evaluated on the two dimensions with error and with measurement time or measurement velocity.
- Commanded positions and actual positions must be got from the numerical control. In other words, this technology can not be applied to numerically controlled machine tools which don't have this interface.

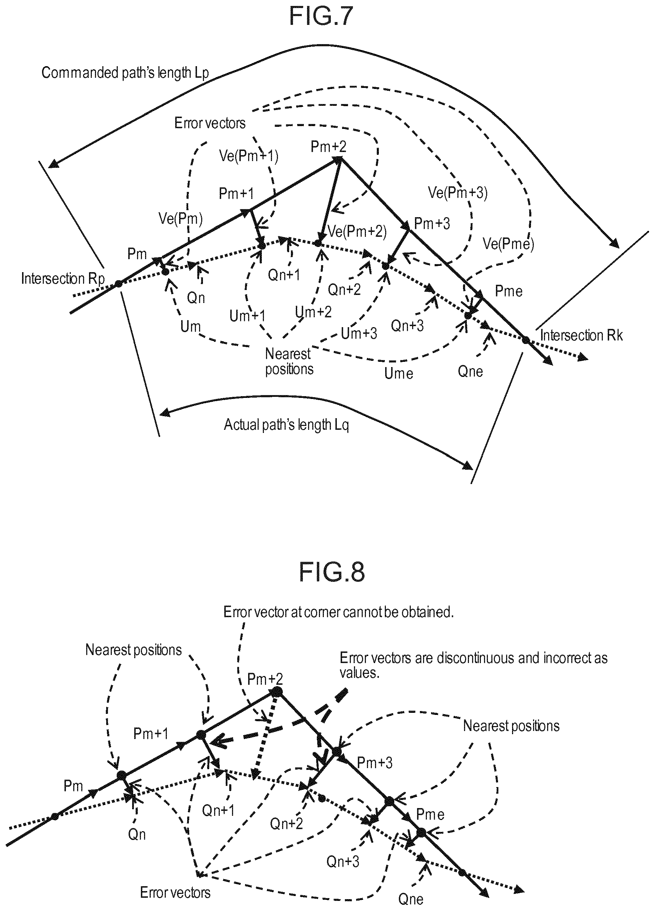

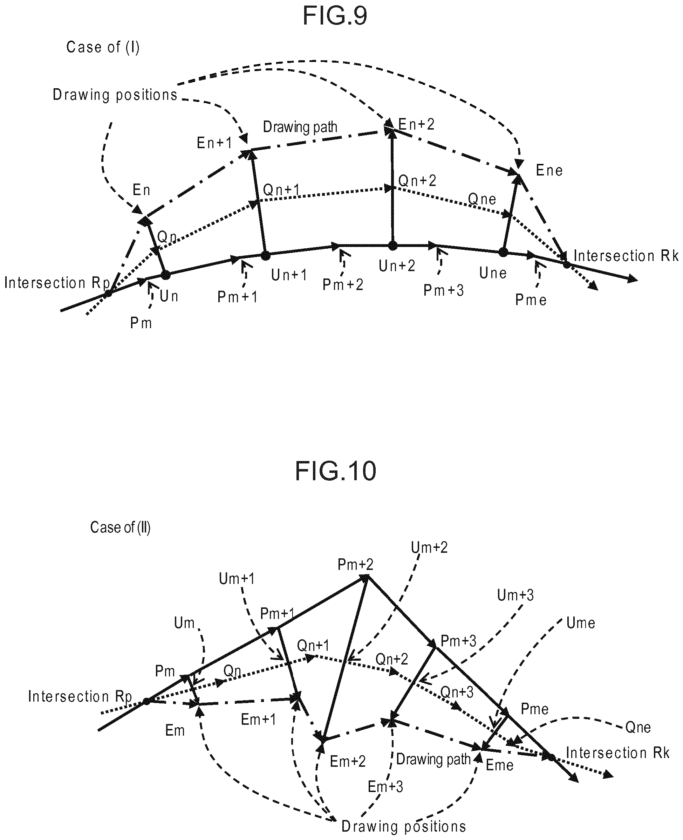

About the discontinuity described above, on the second page of the 9th section in Design and Control of Precision Positioning and Feed Drive Systems(a non-patent document, written by Matsubara A., 2008,. Tokyo Japan:Morikita Publishing Co., Ltd., pp.163-166. [In Japanese]), referring to the figure 9.2, there are the mentions "in measurements by DBB or KGM, the contouring movement error is defined as the length of a perpendicular line from a point on an actual path to the nearest point on the commanded path" and "when the commanded path is not continuous, the error vectors are discontinuous" (This is explained later, referring to the FIG. 8.)

In Japanese Patent No. 5149421, there are the descriptions as follows. Errors from commanded positions to servo positions(actual positions) are calculated and the largest is got as the error, errors from servo positions(actual positions) to commanded positions are calculated and the largest is got as the error, and, according to plural precision data and plural velocity data, estimated machine time and estimated error are got and the precision data and the velocity data which correspond to the shortest machine time within the requested precision are got. But this technology has the following problems.

- As the error, only the largest is got. Therefore, the error is not got continuously.
- It does not have the idea that the error is displayed and evaluated on the two dimensions with error and with measurement time or measurement velocity.

To sum up, these conventional technologies have the following problems.

Problem 1 : The errors are discontinuous. Or, there is a case that the errors are not continuous.
Problem 2 : They don't have the idea that the error is displayed and evaluated on the two dimensions with error and with measurement time or measurement velocity.

DISCLOSURE OF INVENTION

Technical Problem

As described above, the conventional technologies don't have the idea that the error is displayed and evaluated on the two dimensions with error and with measurement time or measurement velocity.

The one reason for that is supposed that, because error between actual path and commanded path is not calculated continuously, the statistical data, including average or standard deviation etc., are not got. Accordingly, they don't have the idea that shows the average, the standard deviations etc. of the error on one dimension for error and displays and estimates the error together with measurement time or measurement velocity as another dimension.

The reason why the error is not calculated continuously is that, as described in Japanese Patent No. 4676549 or as pointed in the above non-patent document, the error is calculated only from actual path to commanded path. When actual path moves inside of commanded paths whose movement direction discontinuously change, like a corner, actual path's length is shorter than commanded path's length. The reason for that is, in such case, when the shortest distance from actual path(path of shorter path's length) to commanded path(path of longer path's length) is calculated, plural directions from actual path to commanded path can have the shortest distance, and as a result the error can become discontinuous and the distance for the real error should exist between those plural directions. In other words, when the error is calculated from actual path with shorter path length to commanded path with longer path length, the calculation is divergent, that is unstable, as a result the error is discontinuous and the error value can't be calculated continuously and correctly. (Concretely described later, referring to FIG. 8)

Therefore, this invention calculates continuous errors, by calculating errors from the longer path to the shorter path between actual path, which is made by connecting actual points gotten when CNC machine tool has been moved, and commanded path. And, this invention provides CNC machine tool measurement device which has velocity-error representation unit, which represents measurement velocity or measurement time as one dimension for velocity element and also represents average, maximum or standard deviation of error or error variation as another dimension. Accordingly, this invention has the following aims.

Aim 1: To calculate continuous error between actual path and commanded path.
Aim 2: To make it possible to represent or evaluate the movement performance of CNC machine tool by two elements of error element(average or maximum error etc.) and velocity element(measurement time or measurement velocity etc.)

Here, since the Aim 1 and the Aim 2 have mutual relations and also have independencies, they are straightened with effects.

i) To attain the Aim 2 for any path including corners, the Aim 1 must be attained. Because, to get statistic data including average error, the error must be continuous. This situation corresponds to the case (B) that the velocity-error representation unit is used in the example 1 and the example 2, described later. In this case, the error calculation unit to attain the Aim 1 and the velocity-error representation unit to attain the Aim 2 are characteristic.
ii) For commanded path without a corner, even only attainment of the Aim 2 has effects. This situation corresponds to the case (B) that the velocity-error representation unit to attain the Aim 1 in the example 3, described later.
iii) For the situation that drawing path is made by magnifying error and the path is represented, even only attainment of the Aim 1 has effects. This situation corresponds to the case (A) that the drawing path representation unit is used. In this case, the error calculation unit to attain the Aim 1 is characteristic in the example 1 and the example 2, described later.

Solution to Problem

The invention according to claim 1 is a measurement device for numerically controlled machine tools, which measures movement performance of a machine tool controlled by a numerical controller, the measurement device for numerically controlled machine tools comprising: a path command unit that commands a commanded path to the numerical controller for movements of the machine tool; a commanded position acquisition unit that acquires commanded positions on the commanded path at discrete times or commanded positions commanded on the commanded path; an actual position acquisition unit that acquires actual positions at discrete times as a result of movements of the machine tool for the commanded path; and an error calculation unit that, out of a commanded path obtained by connecting the commanded positions and an actual path obtained by connecting the actual positions, calculates errors from the longer thereof to the shorter thereof.

The invention according to claim 2 is a measurement device for numerically controlled machine tools according to claim 1, further comprising a drawing path representation unit for displaying a drawing path obtained by magnifying error vectors between the commanded path and the actual path by a predetermined magnification rate and adding magnified error vectors to the commanded path.

The invention according to claim 3 is a measurement device for numerically controlled machine tools according to claim 1, further comprising a velocity-error representation unit that calculates a velocity element by measuring the time as a result of the machine tool's movement with respect to the commanded path and calculates an error element from an error vector between the commanded path and the actual path, and represents at least two dimensional velocity-error data in at least two-dimensional coordinate system or calculates and represents an evaluation function which is a function including the velocity element and the error element.

The invention according to claim 4 is a measurement device for numerically controlled machine tools, which measures movement performance of a machine tool controlled by a numerical controller, the measurement device for numerically controlled machine tools comprising: a path command unit that commands a commanded path to the numerical controller for movements of the machine tool; a commanded position acquisition unit that acquires commanded positions on the commanded path at discrete times or commanded positions commanded on the commanded path; an actual position acquisition unit that acquires actual positions at discrete times as a result of movements of the machine tool for the commanded path; an error calculation unit that, out of a commanded path obtained by connecting the commanded positions and an actual path obtained by connecting the actual positions, calculates errors from the longer thereof to the shorter thereof; and a velocity-error representation unit that calculates a velocity element by measuring the time as a result of the machine tool's movement with respect to the commanded path and calculates an error element from an error vector between the commanded path and the actual path, and represents at least two dimensional velocity-error data in at least two-dimensional coordinate system or calculates and represents an evaluation function which is a function including the velocity element and the error element.

The invention according to claim 5 is a measurement device for numerically controlled machine tools according to claim 3 or claim 4, wherein the velocity element is a measurement time for the movement of the numerically controlled machine tool, or a measurement velocity obtained by dividing the commanded path's length by the measurement time.

The invention according to claim 6 is a measurement device for numerically controlled machine tools according to claim 3 or claim 4, wherein the error element is an average error, which is the average of the lengths of the error vectors, a maximum error, which is the maximum value of the lengths of the error vectors, a standard deviation error, which is a standard deviation of the lengths of the error vectors, an average error variation, which is the average value of error variation amounts that are variation amounts of error vectors with respect to the commanded path, or a maximum error variation, which is the maximum value of the error variation amounts.

The invention according to claim 7 is a measurement device for numerically controlled machine tools according to claim 1 or claim 4, wherein the actual position is a position obtained by averaging measured positions at discrete times as a result of the machine tool's movement with respect to the commanded path.

The invention according to claim 8 is a measurement device for numerically controlled machine tools according to any one of claim 1 to claim 7, wherein the commanded path includes a line segment spiral connecting line segments on a spiral, an O curve formed of a plurality of circles created by repeating inscribing and circumscribing in one circle or a partial curve of the O curve, or a line segment O curve obtained by connecting a point group taken on the O curve or the partial curve of the O curve with line segments

The invention according to claim 9 is a measurement device for numerically controlled machine tools according to any one of claim 1 to claim 11, wherein the machine tool is a machine tool having at least two linear axes, or at least one linear axis and one rotary axis.

Advantageous Effects of Invention

By attaining the Aim 1, it is possible to represent continuous error. (iii) mentioned above) And, by attaining the Aim 1, the Aim 2 for a commanded path including corners can be attained. (i) mentioned above)

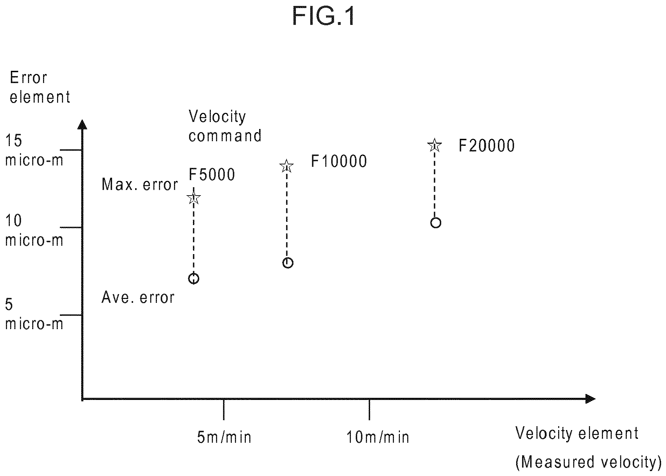

Further, by attaining the Aim 2, it is possible to represent and evaluate CNC machine tool performance, paying attention to the two important elements, the error element and the velocity element, for the performance, like FIG. 1 (on this figure, the maximum error and the average error as the error element, and the measurement velocity as the velocity element are used for example.). (i) and (ii) mentioned above) By that, it becomes easy to understand CNC machine tool performance, and it is easy to compare the performance with other conditions. And, the following effects are also gotten.

1) It is possible to evaluate and compare performances of plural CNC machine tools. Therefore, in the case that a CNC machine tool must be selected to machine work-pieces, those evaluation and comparison can be referred.

2) It becomes possible to easily evaluate and compare how the performance of CNC machine tool varies according to variation of several velocity parameters. By this, those evaluation and comparison can be referred when velocity parameters are adjusted for machining work-pieces by CNC machine tool.

FIG. 1 is an example which represents the average errors and the maximum errors with the horizontal axis of velocity element(measurement velocity = path length/(measurement time)) and the vertical axis of error element(maximum error and average error) when a machine tool has moved on a commanded path with F5000(=5m/min) and F10000(10m/min) and F20000(20m/min). Even if F10000 is commanded, for acceleration and deceleration, the measurement velocity(actual average velocity) is not 10m/min. The figure shows the measurement velocities, which are less than the commanded velocities, with the horizontal axis and the average error and the maximum error, which are got from the movement for the actual path, with the vertical axis of the two dimensions. By comparing another result, which is obtained by moving another machine tool with the same condition, with the result already gotten, or by comparing another result, which is obtained by moving the same machine tool with changed velocity parameters(acceleration or jerk parameters, etc.) or servo parameters(loop gain or feed-forward coefficient, etc.), it gets easy to evaluate how the machine tool performance differs by changing machine tools or changing velocity parameters or servo parameters.

In other words, it gets easy to evaluate how the important movement performance of a machine tool, that is "to machine work-pieces with requested precision in as short time as possible", is attained.

Further, the word "represent" means not only "represent data on a screen" but also "illustrate a diagram on a sheet" or "output data to an external device which represents data on a screen or illustrates a diagram on a sheet".

BRIEF DESCRIPTION OF DRAWINGS

FIG. 1 is a figure showing the representation with the error element and the velocity element;

FIG. 2 is a figure showing the configuration of the embodiment example 1;

FIG. 3 is a figure showing the commanded path from the commanded positions and the actual path from the actual positions;

FIG. 4 is a figure showing the upper part for the command position acquisition unit 9, the actual position acquisition unit11,the error calculation unit 10, the drawing path representation unit 12 and the velocity-error representation unit 13;

FIG. 5 is a figure showing the lower part for the command position acquisition unit 9, the actual position acquisition unit11,the error calculation unit 10, the drawing path representation unit 12 and the velocity-error representation unit 13;

FIG. 6 is a figure showing the relation for the actual path, the commanded path and the error vector in the case that the actual path's length Lq is larger than or equal to the commanded path's length Lp;

FIG. 7 is a figure showing the relation for the actual path, the commanded path and the error vector in the case that the commanded path's length Lp is larger than the actual path's length Lq;

FIG. 8 is a figure showing the relation for the actual path, the commanded path and the error vector with the conventional technology in the case that the commanded path's length Lp is larger than the actual path's length Lq;

FIG. 9 is a figure showing the actual path, the commanded path and the drawing path in the case that the actual path's length Lq is larger than or equal to the commanded path's length Lp;

FIG. 10 is a figure showing the actual path, the commanded path and the drawing path in the case that the commanded path's length Lp is larger than the actual path's length Lq;

FIG. 11 is a figure showing the process of the velocity-error representation unit 13 in the case that the actual path's length Lq is larger than or equal to the commanded path's length Lp;

FIG. 12 is a figure showing the process of the velocity-error representation unit 13 in the case that the commanded path's length Lp is larger than the actual path's length Lq;

FIG. 13 is a figure showing an example with the velocity-error representation;

FIG. 14 is a figure showing another example with the velocity-error representation;

FIG. 15 is a figure showing an example of the commanded path;

FIG. 16 is a figure showing another example of the commanded path;

FIG. 17 is a figure showing still another example of the commanded path;

FIG. 18 is a figure showing an example of a command program(program for the commanded path);

FIG. 19 is a figure showing an example of drawing paths by the drawing path representation unit 12;

FIG. 20 is a figure showing an example to average the actual positions;

FIG. 21 is a figure showing the configuration of the embodiment example 2;

FIG. 22 is a figure showing the countable infinite tree;

FIG. 23 is a figure showing the flowchart to make nodes of the countable infinite tree;

FIG. 24 is a figure explaining F-Link and B-Link;

FIG. 25 is a figure showing how nodes of the countable infinite tree are made;

FIG. 26 (a) is a figure showing one circle is made from three circles, (b) is a another figure showing one circle is made from three circles;

FIG. 27 is a figure showing inner series of O curve;

FIG. 28 is a figure showing inner 2 outer series a of O curve;

FIG. 29 is a figure showing outer series a;

FIG. 30 is a figure showing outer series b;

FIG. 31 is a figure showing O curve made;

FIG. 32 is a figure showing the first way to shift from the circle a to the circle b;

FIG. 33 is a figure showing the second way to shift from the circle a to the circle b;

FIG. 34 is a figure showing the third way to shift from the circle a to the circle b;

FIG. 35 is a figure showing the fourth way to shift from the circle a to the circle b;

FIG. 36 is a figure showing an example of commanded path by O curve;

FIG. 37 is a figure showing an example of command program for O curve;

FIG. 38 is a figure showing an example of a commanded path, an actual path and a drawing path by O curve;

FIG. 39 is a figure showing another example of a commanded path by O curve;

FIG. 40 is a figure showing an example to represent an approximate curve for the relation between the velocity element and the error element;

FIG. 41 is a figure showing an example to represent the relation between the velocity element and the error element with three dimensional coordinates;

FIG. 42 is a figure showing the configuration of the embodiment example 3;

FIG. 43 is a figure showing an example of a commanded path by O1 curve;

FIG. 44 is a figure showing an example of a commanded path by O2 curve;

FIG. 45 is a figure showing an example of a commanded path by linear segments on O2 curve;

FIG. 46 is a figure showing a case that the measurement device 6 is installed on the table 5 of a table rotating type 5-axis machine;

FIG. 47 is a figure showing a case that the measurement device 6 is installed on a jig set on the table of a table rotating type 5-axis machine;

FIG. 48 is a figure showing the conversion and the inverse conversion between the two-dimensional commanded path plane and an inclined plane in the three-dimensional space;

DESCRIPTION OF EMBODIMENTS

The embodiment examples of this invention are explained as the embodiment example 1 to the embodiment example 5, referring to figures in the followings. Here, the following embodiment examples don't limit the invention described in the claims only to the embodiment examples. And, all the combinations of characteristics explained in the embodiment examples are not necessary for the solution means of the invention.

1. Embodiment example 1

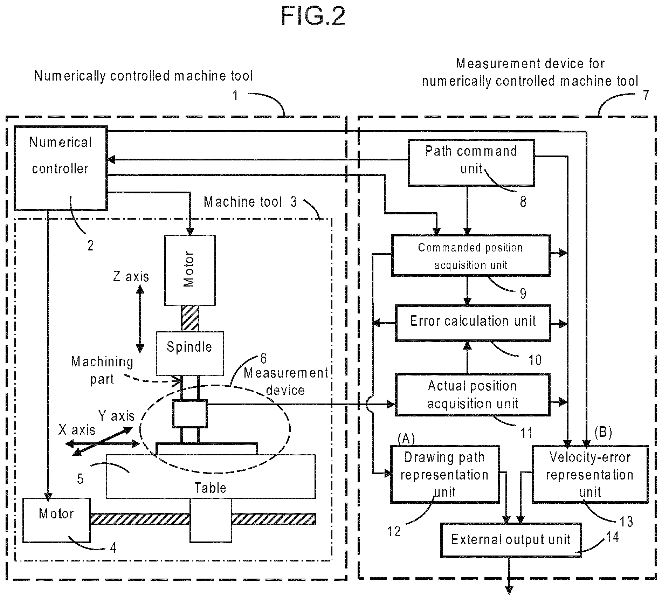

In this example, the measurement device for numerically controlled machine tools 7 exists outside the numerical controller 2, the commanded path is a line segment spiral which is made by connecting lines on a spiral, and the actual path is obtained from the machine tool 3 having at least two linear axes(X axis and Y axis in FIG. 2).

<Configuration>

In FIG. 2, the system configuration of the invention is explained. In this embodiment, the measurement device for numerically controlled machine tools 7 measures the movement performance of the machining part of the numerically controlled machine tool 1 which consists of the machine tool 3 and the numerical controller 2 controlling the machine tool 3. The numerical controller 2 moves the machine tool 3 in accordance with a path sent from the path command unit 8 which the measurement device for numerically controlled machine tools 7 has. Positions on the commanded path are obtained by the path command unit 8 or by the commanded position acquisition unit 9. The measurement device 6 is equipped on the machining part of the machine tool 3 and the table 5. The measurement device 6 relatively moves in accordance with the commanded path of an arbitrary path on two dimensions(X, Y axes on the figure), and actual positions of actual movement are sent to the actual position acquisition unit 11. The device and the method to measure the movement performance of the machine tool 3 like this is known widely. (For example, refer to "Measurement of an ultra-precise NC machine tool's movement performance and improvement of the machining precision by a cross grating scale" of Kakino et al., Precision Engineering Vol.62, No.11, 1996, page 1612 - 1616, or "Measuring device and measuring method for machine accuracy", the Japanese patent JPH11216644)

And, in this invention, the measurement device for numerically controlled machine tools 7 has the error calculation unit 10, and the error calculation unit 10 calculates errors(error values of error vectors and an average or a maximum of lengths of error vectors) from commanded positions got by the command position acquisition unit 9 and actual positions got by the actual position acquisition unit 11. And, the commanded position acquisition unit 9 obtains a time(measurement time) which the machine tool 3 has spent to move in accordance with the commanded path, from the numerical controller 2.

Further, this invention has the following (A) and (B). These (A) and (B) correspond to (A) and (B) shown in FIG 2. Even when one of (A) and (B) exists in this invention, it has effects. Of course, when both of (A) and (B) exist in this invention, they have more effects. Mainly, (A) attains the Aim 1 and (B) attains the Aim 2.

(A) The error calculation unit 10 sends the calculated errors to the drawing path representation unit 12, calculates the drawing path by multiplying the error vectors by the coefficient and adding them to the commanded path, and represents the drawing path with the commanded path.

(B) The error calculation unit 10 sends the calculated errors to the velocity-error representation unit 13. The velocity-error representation unit 13 calculates the error element. The commanded potion acquisition unit 9 acquires the time which has been spent for the movement in accordance with the commanded path, and sends the time to the velocity-error representation unit 13 as the measurement time. Or, the actual position acquisition unit 11 measures the movement time and sends the time to the velocity-error representation unit 13 as the measurement time. The error calculation unit 10 calculates the length of the commanded path from commanded positions and sends it to the velocity-error representation unit 13. Or, the path command unit 8 sends the length of the commanded path to the velocity-error representation unit 13. The velocity-error representation unit 13 calculates the velocity element from the measurement time and the length of the commanded path and represents the velocity element and the error element on at least two dimensions.

Here, the configuration is that the measurement device for numerically controlled machine tools 7 has the path command unit 8, but the configuration can be that the numerical controller 2 has the path command unit 8 and the numerical controller 2 sends commanded positions to the commanded position acquisition unit 9 at discrete times or sends commanded positions on the commanded path to the commanded position acquisition unit 9. Then, the configuration is that the path command unit 8 of the measurement device for numerically controlled machine tools 7 exists in the numerical controller 2.

<Commanded position acquisition, Actual position acquisition, Error calculation>

Commanded position acquisition, actual position acquisition and error calculation are explained in detail.

(1) Commanded position acquisition

The commanded path is made by the path command unit 8, and the command position acquisition unit 9 acquires commanded positions on the commanded path at discrete times, or acquires commanded positions commanded on the commanded path. Or, the commanded path made by the path command unit 8 is sent to the numerical controller 2, and the numerical controller 2 moves the machine tool 3 in accordance with the commanded path and makes commanded positions on the commanded path at discrete times, and the commanded position acquisition unit 9 acquires the commanded positions from the numerical controller 2. Or, the commanded position acquisition unit 9 acquires the commanded positions commanded on the commanded path from the numerical controller 2.

(2) Actual position acquisition

The actual position acquisition unit 11 acquires the positions, which the measurement device 6 has measured at discrete times, as the actual position.

(3) Error calculation

The error calculation unit 10 makes the commanded path by connecting the commanded positions, makes the actual path by connecting the actual positions, and calculates the error from the longer path to the shorter path between those two paths. In detail, the error calculation unit 10 calculates the error as follows.

    1) Obtains intersections between the commanded path and the actual path.
    2) Compares the commanded path's length and the actual path's length between two intersections.
    3) Calculates the error from the path having the longer length to the path having the shorter length. Here, the two lengths are the lengths between two intersections. In other words, in the case that the actual path's length is longer than the commanded path's length, the error calculation unit 10 obtains the shortest position on the commanded path from the actual position and makes the error vector from the obtained shortest position on the commanded path to the actual position, and in the case that the commanded path's length is longer than the actual path's length, the error calculation unit 10 obtains the shortest position on the actual path from the commanded position and makes the error vector from the commanded position to the obtained shortest position on the actual path.

By calculating the error from the path having the longer path's length to the path having the shorter path's length, the error can be calculated in the convergent direction, that is the direction to be more stable, as a result, even at a place where the machining direction changes like at a corner, the error can be calculated continuously and correctly as values.

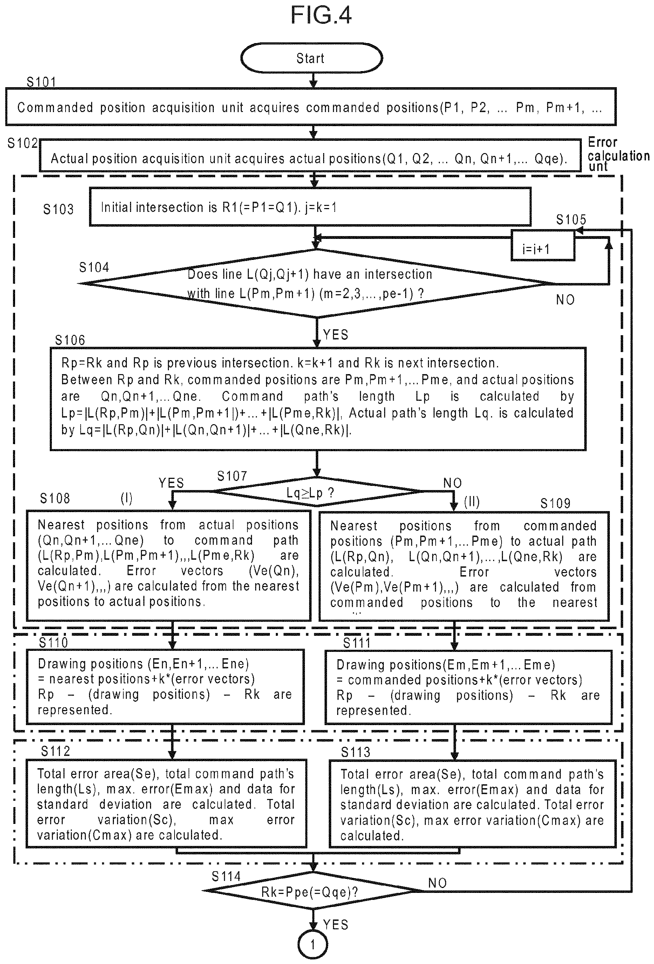

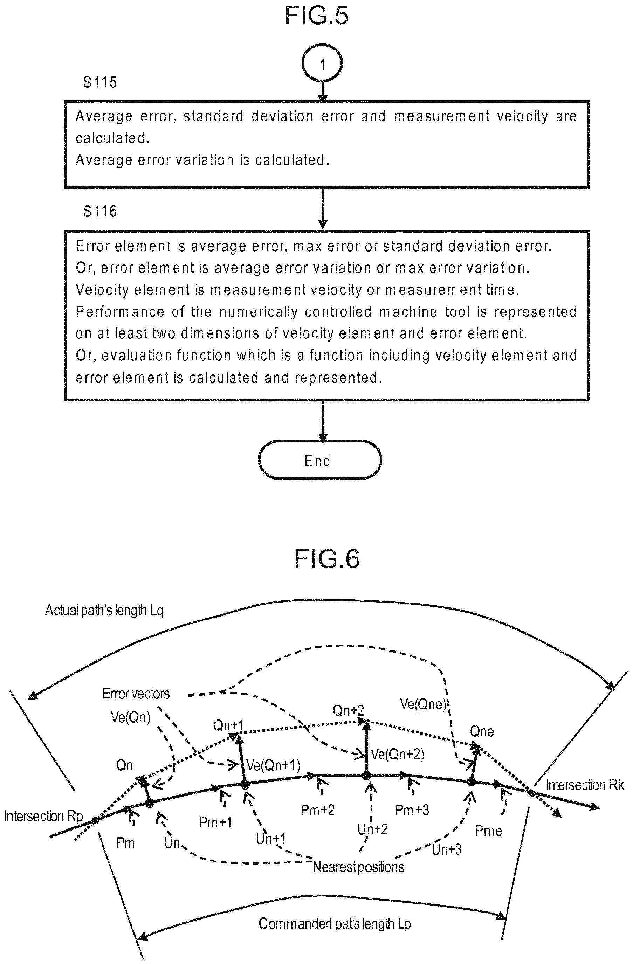

The commanded position acquisition unit 9, the actual position acquisition unit 11, the error calculation unit 10, the drawing path representation unit 12 and the velocity-error representation unit 13 are explained in accordance with the flow chart (FIG. 4, FIG 5).

(STEP S101) The commanded position acquisition unit 9 acquires the commanded positions (P1, P2, , , , Pm, Pm+1 , , , , Ppe)

(STEP S102) The actual position acquisition unit 11 acquires the actual positions (Q1, Q2, , , , Qn, Qn+1, , , , Qqe)

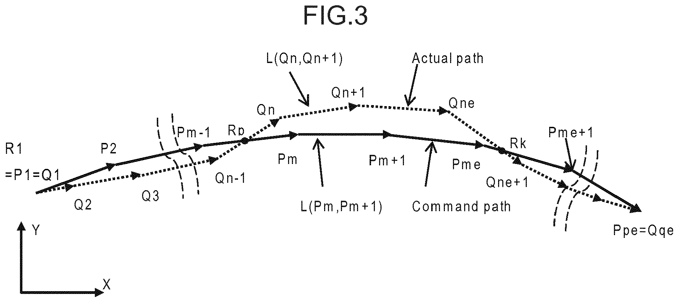

They are acquired like FIG.3, for example. Pm, Qn, etc. are position vectors, like Pm(Pmx, Pmy), Qn(Qnx, Qny) etc. The number of the commanded positions and the number of the actual positions are not equal. Generally, because of the delay of acceleration/deceleration or servo, the number of the actual positions are more than that of the commanded positions. L(Qn, Qn+1), L(Pm, Pm+1) etc. signify the line(vector) from the position Qn to Qn+1, the line(vector) from the position Pm to Pm+1 etc. "+1" or "-1" etc. after the small letters are notations for the small letters, in other words, Pm+1 signifies No.(m+1) of P. Hereinafter, the significations are similar.

Therefore, between the starting position and the ending position, the commanded path and the actual path are as follows.

The commanded path : L(P1, P2), L(P2, P3), , , , L(Pm, Pm+1), , , L(Ppe-1, Ppe) (m=1, 2, , , , pe-1)

The actual path : L(Q1, Q2), L(Q2, Q3), , , , L(Qn, Qn+1), , , L(Qqe-1, Qqe) (n=1, 2, , ,, qe-1)

The steps S103 to S109 (bordered by a broken line) express the error calculation unit 10.

(STEP S103) The initial intersection is R1(=P1=Q1). 1 is set to j and k.(j=k=1)

(STEP S104) Whether or not the line L(Qj, Qj+1) has an intersection with the line L(Pm, Pm+1) (m=2, 3, , , , pe-1) is checked. If the result is NO, the process goes to STEP S105. If the result is YES, the process goes to STEP S106.

(STEP S105) j=j+1, and the process goes to STEP S104. In other words, STEP S104 and STEP S105 search for a place where the actual path and the commanded path have an intersection.

(STEP S106) Rp=Rk, and Rp is the previous intersection. k=k+1, and Rk is the current intersection.

Between Rp and Rk, the commanded positions are Pm, Pm+1, , , , Pme, and the actual positions are Qn, Qn+1, , , , Qne, and the commanded path's length Lp and the actual path's length Lq are obtained. In other words, the calculation (1) is done.

$$Lp = |L(Rp,Pm)| + |L(Pm,Pm+1)| + \ldots + |L(Pme,Rk)|$$
$$Lq = |L(Rp,Qn)| + |L(Qn,Qn+1)| + \ldots + |L(Qne,Rk)|$$

$$(1)$$

This step is further explained. Rp is the previous intersection(the intersection where L(Pm-1, Pm) and L(Qn-1, Qn) cross), and Rk is the next intersection(the intersection where L(Pme, Pme+1) and L(Qne, Qne+1) cross). Here, the word "cross" means that a path intersects another path or a position on a path is near enough to another path(the distance between those paths is less than a limit). The calculation to obtain those intersections from the commanded positions and the actual positions is not explained, because it is conventional. Additionally, the starting point and the ending points are also intersections. And, there is a case that the commanded path and the actual path don't have an intersection without the starting point and the ending point.

(STEP S107) Whether or not the actual path's length Lq is larger than or equal to the commanded path's length Lp is checked. In the case that the result is YES, the process goes to (STEP S108), and in the case that the result is NO, the process goes to STEP S109. Hereinafter, (I) indicates the case of YES and (II) indicates the case of NO. FIG.6 shows an example of (I). FIG.7 shows an example of (II)

(STEP S108) The nearest potions from the actual positions(Qn, Qn+1, , , , Qne) to the commanded path(plural lines of L(Rp, Pm), L(Pm, Pm+1), , , , L(Pme, Rk)) are calculated, and each error vector(Ve(Qn), Ve(Qn+1), , ,) from each nearest position to each actual position is calculated.

This step(the case of (I)) is supplemented with a figure FIG.6. As FIG.6, the commanded positions are expressed by Pm, Pm+1, Pm+2, , , , Pme, and the actual positions are expressed by Qn, Qn+1, Qn+2, , , , Qne, and the actual path and the commanded path connect those points. And those paths have the intersections Rp and Rk. The nearest positions on the commanded path from the actual positions on the actual path between two intersections are obtained as (Un, Un+1, , , , Une). The error vectors from the nearest positions to the actual positions are Ve(Qn), Ve(Qn+1), Ve(Qn+2), , , , Ve(Qne), corresponding to Qn, Qn+1, Qn+2, , , , Qne. The calculation to obtain the nearest positions is not explained, because it is conventional.

(STEP S109) The nearest potions from the commanded positions(Pm, Pm+1, , , , Pme) to the actual path(plural lines of L(Rp, Qn), L(Qn, Qn+1), , , , L(Qne, Rk)) are calculated, and each error vector(Ve(Pm), Ve(Pm+1), , ,) from each commanded position to each nearest position is calculated.

This step(the case of (II)) is supplemented with a figure FIG.7. As FIG.7, The nearest positions on the actual path from the commanded positions(Pm, Pm+1, Pm+2, , , , Pme) on the commanded path between two intersections are obtained as (Um, Um+1, , , , Ume). The error vectors from the commanded positions to the nearest positions are Ve(Pm), Ve(Pm+1), Ve(Pm+2), , , , Ve(Pme), corresponding to Pm, Pm+1, Pm+2, , , , Pme. The calculation to obtain the nearest positions is not explained, because it is conventional.

Here, in comparison with this step, the fact that the conventional technology obtains the errors discontinuously and can't obtain the error values correctly (especially at corners) is explained with FIG. 8. The conventional technology calculates the nearest positions on the commanded path always from the actual positions to the commanded path, and obtains the error vectors from the nearest positions to the actual positions. In other words, even at corners, the conventional technology obtains the nearest positions from the shorter path(actual path) to the longer path(commanded path) in the divergent direction, that is the direction to be more unstable. As a result, the error vectors are discontinuous, and the error vectors have incorrect values, especially at corners. Concretely, as FIG.8 shows, the error vectors suddenly change the directions at Qn+1 to Qn+2. And, since the error vector's length is largest at Pm+2, the error vector from Pm+2 to the actual path should be obtained as the maximum error vector, but that maximum error vector is not obtained by the conventional technology. Accordingly, the conventional technology can't correctly obtain the error vector values.

Therefore, as described above, this problem can be solved by this invention. In other words, as described above, by calculating the error from the path having the longer path's length to the path having the shorter path's length, the error can be calculated in the convergent direction, that is the direction to be more stable, as a result, even at a place where the machining direction changes like at a corner, the error can be calculated continuously and correctly as values.

The part bordered by alternate long and short dash lines is the drawing path representation unit 12.

(STEP S110) The drawing positions(En, En+1, , , , Ene) are calculated by "En, En+1, , , , Ene=the nearest positions + k*(the error vectors)", and Rp ~ the drawing positions(En, En+1, , , , Ene) ~ Rk are represented.

This step is supplemented as follows. In the case of (I), the drawing path representation unit 12 calculates the drawing positions(En, En+1, , , , Ene) by the expression (2).

$$(En,En+1, , , Ene) = (\text{the nearest positions}) + k*(\text{the error vectors})$$

That is,

$$En = Un + k*Ve(Qn)$$

$$(Ve(Qn) = Qn - Un )$$

$$En+1 = Un+1 + k*Ve(Qn+1)$$

$$(Ve(Qn+1) = Qn+1 - Un+1))$$

$$. . .$$

$$Ene = Une + k*Ve(Qne)$$

$$(Ve(Qne) = Qne - Une)$$

$$(2)$$

Here, "k" is the coefficient (a predetermined magnification rate) to magnify the error vectors, and it is generally a few times 1000 or a few times 10000 etc., which is also similar in STEP S111. And, Rp ~ the drawing positions(En, En+1, , , , Ene) ~ Rk are connected by lines and those lines are represented. (FIG. 9)

(STEP S111) The drawing positions(En, En+1, , , , Ene) are calculated by "Em, Em+1, , , , Eme=the commanded positions + k*(the error vectors)", and Rp ~ the drawing positions(En, En+1, , , , Ene) ~ Rk are represented.

This step is supplemented as follows. In the case of (II), the drawing path representation unit 12 calculates the drawing positions(Em, Em+1, , , , Eme) by the expression (3).

$$(Em,Em+1, , , Eme) = (\text{the commanded positions}) + k*(\text{the error vectors})$$

That is,

$$Em = Pm + k*Ve(Pm)$$

$$(Ve(Pm) = Um - Pm)$$

$$Em+1 = Pm+1 + k*Ve(Pm+1)$$

$$(Ve(Pm+1) = Um+1 - Pm)$$

$$. . .$$

$$Eme = Pm + k*Ve(Pme)$$

$$(Ve(Pme) = Ume - Pme)$$

$$(3)$$

And, Rp ~ the drawing positions(Em, Em+1, , , , Eme) ~ Rk are connected by lines and those lines are represented. (FIG. 10)

As a result, by STEP S110 and STEP S111, the drawing path made by connecting the drawing positions is represented like the alternate long and short dash lines in FIG.9 and FIG.10. Here, for drawing's convenience, k is 2. By magnifying the error vectors to the drawing path like this, it is easy to understand the situation of the error. Usually, the commanded path is also represented at the same time.

As described above, since the error calculation unit 10 calculates the error vectors continuously and correctly, the drawing path is represented continuously and correctly, because it is represented by connecting the drawing positions gotten by magnifying the error vectors with this invention.

The part bordered by alternate long and two short dash lines is a part of the velocity-error representation unit 13.

(STEP S112) The total error area(Se), the total commanded path's length(Ls), the maximum error(Emax), the data for the standard deviation are calculated. And, the total error variation(Sc) and the maximum error variation(Cmax) are also calculated.

This step is supplemented as follows. In the case of (I), firstly the total error area(Se), the total commanded path's length(Ls) and the maximum error(Emax) are calculated. These values are scalar values, that is similar in STEP S113.

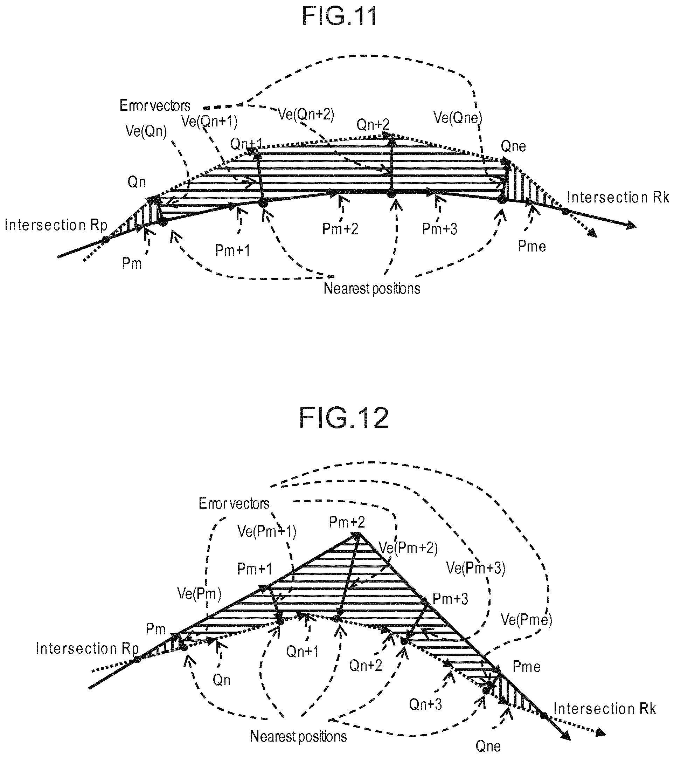

In FIG.11, S(Rp, Qn) is the triangle area made by Rp, Qn and Ve(Qn). Similarly, S(Qne, Rk) is the triangle area made by Qne, Ve(Qne) and Rk. (Expressed by vertical lines in FIG.11) And, in FIG.11, S(Qn, Qn+1) is the quadrangle area made by Qn, Qn+1, Ve(Qn) and Ve(Qn+1). Similarly, S(Qn+1, Qn+2) is the quadrangle area made by Qn+1, Qn+2, Ve(Qn+1) and Ve(Qn+2), and so on. (Expressed by horizontal lines in FIG. 11) Here, polygonal areas including Pm, Pm+1 , , , Pme may be more correct, but the triangle areas and the quadrangle areas are used for simplicity.

"the total error area is calculated" is to calculate the expression (4).

$$Se=Se+S(Rp,Qn)+S(Qn,Qn+1)+ \ldots +S(Qne,Rk) \qquad (4)$$

"the total commanded path's length(Ls) is calculated" is to calculate the expression (5).

$$Ls=Ls+Lp \qquad (5)$$

"the maximum error(Emax) is calculated" is to compare the lengths of the error vectors Ve(Qn) ~ Ve(Qne) with Emax and, if one of them is larger than Emax, to replace Emax with it. Accordingly, Emax is the maximum error, which is the largest length among the error vectors. Then, it is useful to register the commanded position Un+i corresponding to Emax, in order to analyze the position where Emax is generated.

"the data for the standard deviation is calculated" is to accumulate the square of the error vector's lengths, that is to calculate the expression (6).

$$W\sigma = W\sigma + \frac{S(Rp,Qn)^2}{|L(Rp,Un)|} + \frac{S(Qn,Qn+1)^2}{|L(Un,Un+1)|} + \cdots + \frac{S(Qne,Rk)^2}{|L(Une,Rk)|} \qquad (6)$$

"the total error variation(Sc) is calculated" is to accumulate the variation of the error vector's length, that is to calculate the expression (7).

$$Sc=Sc+|Ve(Qn)|+||Ve(Qn+1)|-|Ve(Qn)||+ \ldots +||Ve(Qne)|-|Ve(Qne-1)||+|Ve(Qne)| \qquad (7)$$

"the maximum error variation(Cmax) is calculated" is to compare the variation of the lengths of the error vectors Ve(Qn) ~ Ve(Qne) to the commanded path

$$|Ve(Qn|/|L(Rp,Un)|$$

$$||Ve(Qn+1|-|Ve(Qn)||/|L(Un,Un+1)|$$

$$\ldots$$

$$||Ve(Qne)|-|Ve(Qne-1)||/|L(Une-1,Une)|$$

$$|Ve(Qne)|/|L(Une,Rk)|$$

with Cmax, and, if one of them is larger than Cmax, to replace Cmax with it. Accordingly, Cmax is the maximum variation of the lengths of the error vectors to the commanded path.

Here, the initial Sc, Ls, Emax, Wσ, Sc and Cmax are 0 for all the processes of STEP S112 for (I) and STEP S113 for (II).

(STEP S113) The total error area(Se), the total commanded path's length(Ls), the maximum error(Emax), the data for the standard deviation are calculated. And, the total error variation(Sc) and the maximum error variation(Cmax) are also calculated.

This step is supplemented as follows. In the case of (II), firstly the total error area(Se), the total commanded path's length(Ls) and the maximum error(Emax) are calculated.

S(Rp, Pm) is the triangle area made by Rp, Pm and Ve(Pm). Similarly, S(Pme, Rk) is the triangle area made by Pme, Ve(Pme) and Rk. (Expressed by vertical lines in FIG.12) And, S(Pm, Pm+1) is the quadrangle area made by Pm, Pm+1, Ve(Pm) and Ve(Pm+1). Similarly, S(Pm+1, Pm+2) is the quadrangle area made by Pm+1, Pm+2, Ve(Pm+1) and Ve(Pm+2), and so on. (Expressed by horizontal lines in FIG. 12)

Similarly to (I), "the total error area is calculated" is to calculate the expression (8).

$$Se=Se+S(Rp,Pm)+S(Pm,Pm+1)+ . . . +S(Pme,Rk) \qquad (8)$$

"the total commanded path's length(Ls) is calculated" is to calculate the expression (9).

$$Ls=Ls+Lp \qquad (9)$$

"the maximum error(Emax) is calculated" is to compare the lengths of the error vectors Ve(Pm) ~ Ve(Pme) with Emax and, if one of them is larger than Emax, to replace Emax with it. Accordingly, Emax is the maximum error, which is the largest length among the error vectors. Then, it is useful to register the commanded position Pm+j corresponding to Emax, in order to analyze the position where Emax is generated.

"the data for the standard deviation is calculated" is to accumulate the square of the error vector's lengths, that is to calculate the expression (10).

$$W\sigma = W\sigma + \frac{S(Rp,Pm)^2}{|L(Rp,Pm)|} + \frac{S(Pm,Pm+1)^2}{|L(Pm,Pm+1)|} + \cdots + \frac{S(Pme,Rk)^2}{|L(Pme,Rk)|} \qquad (10)$$

"the total error variation(Sc) is calculated" is to accumulate the variation of the error vector's length, that is to calculate the expression (11).

$$Sc=Sc+|Ve(Pm)|+||Ve(Pm+1)|-|Ve(Pm)||+ . . . +||Ve(Pme)|-|Ve(Pme-1)||+|Ve(Pme)| \qquad (11)$$

"the maximum error variation(Cmax) is calculated" is to compare the variation of the lengths of the error vectors Ve(Pm) ~ Ve(Pme) to the commanded path

$$|Ve(Pm|/|L(Rp,Pm)|$$

$$||Ve(Pm+1|-|Ve(Pm)||/|L(Pm,Pm+1)|$$

. . .

$$||Ve(Pme)|-|Ve(Pme-1)||/|L(Pme-1,Pme)|$$

$$|Ve(Pme)|/|L(Pme,Rk)|$$

with Cmax, and, if one of them is larger than Cmax, to replace Cmax with it. Accordingly, Cmax is the maximum variation of the lengths of the error vectors to the commanded path.

(STEP S114) Whether Rk is equal to Ppe(=Qqe) or not is checked. If the result is NO, the process goes to STEP105. If the result is YES, the process goes to STEP S115. In other words, when the intersection is equal to the ending point, the process goes to STEP S115, and when the intersection is not equal to the ending point, the process goes to the step to search for the next intersection.

STEP S115 and STEP S116 are a part of the velocity-error representation unit 13.

(STEP S115) The average error, the standard deviation error and the measurement velocity are calculated. The average error variation is also calculated.

This step is supplemented as follows. "the average error(Eav) is calculated" is to calculate the expression (12). The average error is the average of the error vector's lengths.

$$Eav = \frac{Se}{Ls} \qquad (12)$$

"to calculate the standard deviation error (Eσ)" is to calculate the expression (13). The standard deviation error is the standard deviation of the error vector's lengths.

$$E\sigma = \sqrt{\frac{W\sigma}{Ls}} \qquad (13)$$

"to calculate the measurement velocity" is to calculate the measurement velocity Vm by the expression (14), in which the measurement time Tm is the time measured for the movement of the numerically controlled machine tool 1

$$Vm = \frac{Ls}{Tm} \qquad (14)$$

"to calculate the average error variation (Cav)" is to calculate the expression (15). The calculated Cav is the average of the variation of the lengths of the error vectors to the commanded path

$$Cav = \frac{Sc}{Ls} \qquad (15)$$

(STEP S116) The error element is the average error, the maximum error or the standard deviation error. Or, the error element is the average error variation or the maximum error variation. The velocity element is the measurement velocity or the measurement time. The performance of the numerically controlled machine tool is represented on the at least two dimensions of the velocity element and the error element. Or, the evaluation function which is a function including the velocity element and the error element is calculated and represented.

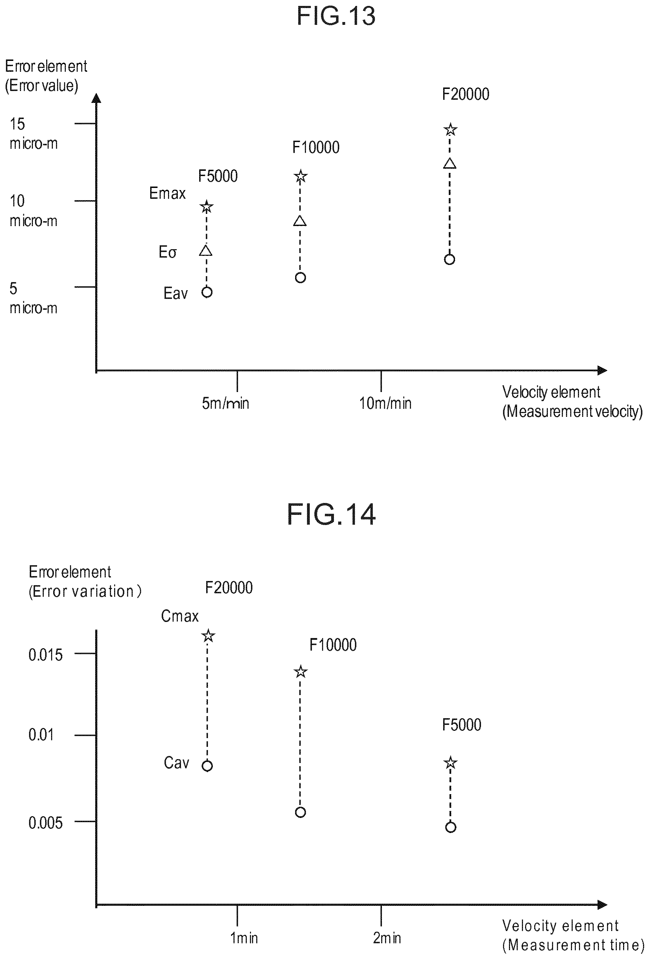

This step is supplemented as follows. Here, the velocity element is the measurement velocity(Vm), the error element is the error values of the average error(Eav), the maximum error(Emax) and the standard deviation error(Eσ), and the performance of the numerically controlled machine tool is represented on the at least two dimensions of those elements.(FIG. 13) FIG. 13 represents the average errors(Eav), the maximum errors(Emax) and the standard deviation errors(Eσ) at the measurement velocities which are the velocities measured in the case that the machine tool is moved on the commanded path with the commanded federate F5000, F10000 and F20000. In this example, the error element is the error values of the average error(Eav), the maximum error(Emax) and the standard deviation error(Eσ). But a part of them can be the error element. And, in this example, the performance is generally better when the velocity element(measurement velocities) is faster and the error element is smaller.

Or, the error element can be the error variation. When the error element is the error variation, the performance of the numerically controlled machine tool can be represented as the performance including the movement smoothness. And, the velocity element can be the measurement time. In FIG.14, the velocity element is the measurement time(Tm) and the error element is the average error variation(Cav) and the maximum error variation(Cmax), and the performance is represented on the at least two dimensions of those elements. Here, the error element is the average error variation(Cav) and the maximum error variation(Cmax), but a part of them can be the error element. And, the velocity element of FIG.13 and that of FIG.14 can be exchanged. In this example(FIG. 14), the performance is generally better when the velocity element(measurement times) is shorter and the error element is smaller.

FIG. 13 and FIG. 14 show the two dimensions, but the dimensions can be three by combining those, which is shown in the embodiment example 2.

Or, as a function with the velocity element and the error element (Vm, Tm, Eav, Emax, Eσ, Cav, Cmax), the evaluation function Fe(Vm, Tm, Eav, Emax, Eσ, Cav, Cmax) can be calculated and represented in the velocity-error representation unit 13. Here, the elements of Vm, Tm etc. can be a part of them.

For example, the following expression (16) for Fe is calculated and the value of Fe is represented. ke1, ke2, ke3, ke4, ke5 are the coefficients of the terms, the symbol Σ indicates the additions for the number of measuring times, and n indicates the number of measuring times. Accordingly, the expression is an example with Σ**/n (Here, ** indicates Eav, Emax etc.) for the average of the measurement values by the number of measuring times, but the expression can be composed of other function terms. Further, the expression is Fe=f(Eav,Emax)*g(Vm), but the expression can be another function type. By Fe, the movement performance of the numerically controlled machine tool can be represented.

$$F_e = f(Eav, Emax) * g(Vm)$$

$$f(Eav, Emax) = \frac{1}{ke1 * \dfrac{\sum Eav}{n} + ke2 * \dfrac{\sum Emax}{n} + ke3}$$

$$g(Vm) = ke4 * \frac{\sum Vm}{n} + ke5$$

(16)

Although, here, the drawing path is represented by the drawing path representation unit 12 and the performance of the numerically controlled machine tool is represented on the basis of the velocity element and the error element by the velocity-error representation unit 13, it is not only represented on the screen but also can be output as data to the outside and represented on the screen of the external device. Output of data to the outside is performed by the external output unit 14 in FIG. 2. That is, although the external output unit 14 is not indispensable in FIG. 2, there can be a case that the external output unit 14 output data to the outside.

In this manner, the statistical data such as the average value, the maximum value, the standard deviation, etc. of the error (error vector length and its variation) can be obtained by calculating the error continuously and quantitatively correctly by this invention , And it is possible to represent at least two-dimensional velocity-error data with the velocity element as one dimension and the error element as the other dimension. Further, the error vector can be magnified and continuously represented as the drawing path. Alternatively, the evaluation function representing the movement performance can be calculated and represented. As a result, the effect described in the "Effect of the Invention" can be obtained.

Although, here, the explanation is made assuming that all the command positions(P1, P2, , , , Pm, Pm+1, , , , Pe) and all the actual positions(Q1, Q2, , , , Qn, Qn+1, , , , Qe) are acquired from the starting point to the ending point, it is also possible that the commanded positions and the actual positions are memorized in a fixed amount of memory. In such a case, if the memory amount is exceeded when the most recent commanded position and the most recent actual position are memorized, the oldest commanded position and the oldest actual position are deleted in a ring data, and the most recent commanded position and the most recent actual position are memorized instead of the deleted data. And, those commanded positions and actual positions memorized in the fixed amount of memory can be proceeded with the same process described above. However, in this case, the memory amount required to store the commanded positions and the actual positions between the two intersections is necessary.

<Commanded path>

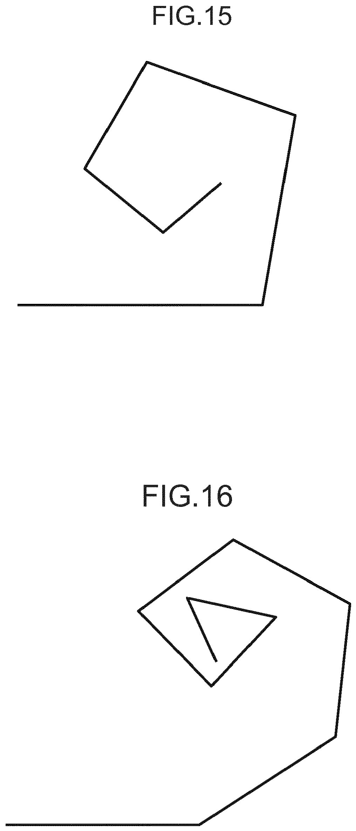

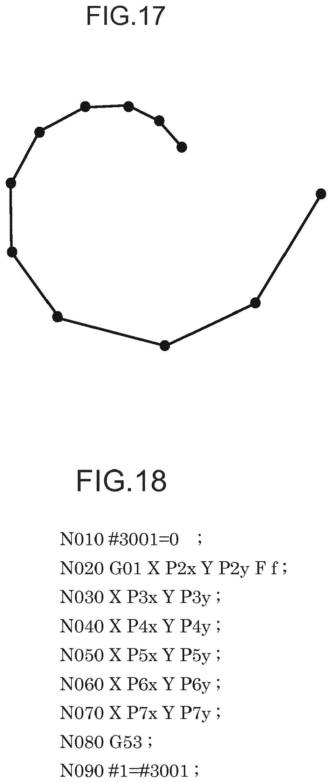

An example of the commanded path is shown in FIG.15, which consists of the lines on which the angle formed by the traveling direction from one line segment to the next line segment is constant and the line segment length becomes shorter by a constant ratio. In this way, the path in which the line segments are connected in a spiral form is called a line segment spiral. Alternatively, the line segment spiral can be created such that the line segment length changes constantly and the angle formed by the traveling direction from one line segment to the next line segment changes constantly. (FIG. 16) Alternatively, a line segment spiral can be created by taking points on a commonly known spiral such as logarithmic spiral, Archimedes spiral, clothoid curve, and connecting these with line segments. FIG.17 shows a line segment spiral created on a logarithmic spiral. The reason why such line segment spiral is used as the commanded path is that the path commands for general machining have many linear interpolation commands (G01 commands), and, therefore, such line segment spiral is suitable to measure the movement performance of the numerically controlled machine tool 1 at corners between a linear interpolation command, which has a traveling direction and a length, and the next linear interpolation command which has another traveling direction and another length.

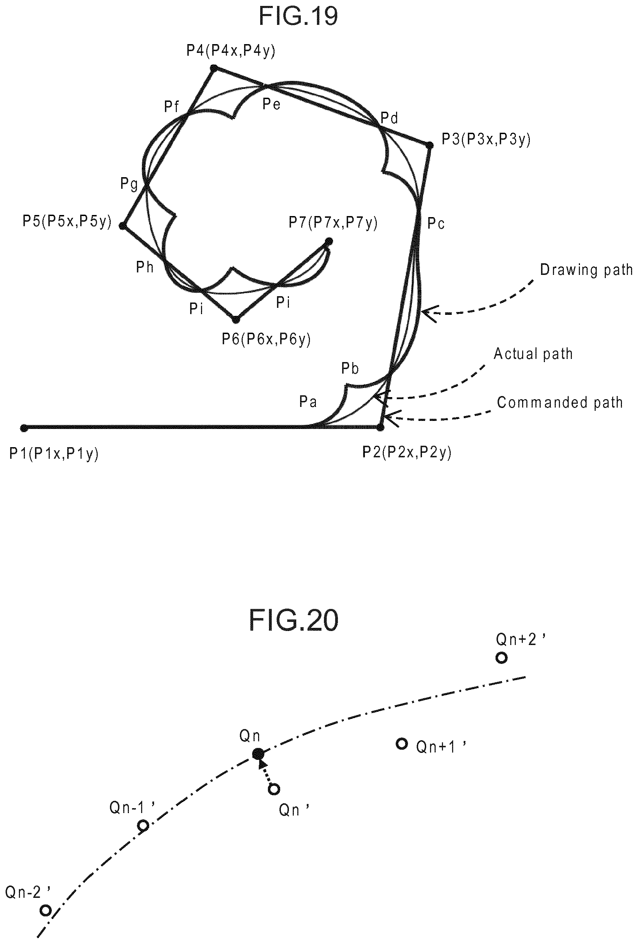

As an example, an example of drawing path representation by the drawing path representation unit 12 in the case where the commanded path is a line segment spiral having a constant intersection angle and changing segment lengths is shown. (FIG. 19) Note that the actual path is also shown here. The drawing representation unit 12 may also represent the actual path in this way.

The command program (program for the commanded path) is as shown in FIG. 18. The initial position is assumed to be P1. #3001 is the macro variable for the timer. After moving from P1(P1x, P1y) to P7(P7x, P7y) at the commanded feedrate f in the blocks of N020 to N070, looking-ahead is stopped at the block of N080G53; and the time spent is measured at N090 by the macro variable. The measured time is sent as Tm from the numerical controller 2 to the measurement device for numerically controlled machine tool 7. In this case, the commanded path is from P1 to P7, but it can be from P7 to P1 or a round trip path.

The commanded position acquisition unit 9 acquires the positions on the commanded path at the discrete time with respect to the commanded path P1 to P7 as the commanded positions or may acquire P1 to P7 themselves as the commanded positions.

In FIG. 19, since the error is generally very small (on the order of several micro-m or several tens micro-m), the actual path is very close to the commanded path and is difficult to be shown. Therefore, in this example, the acceleration/deceleration delay, the servo motor delay, and the overshoot factor are increased to increase the error, making the actual path easy to be seen. Pa, Pb, ... , etc. are intersection points between the commanded path and the actual path. The actual path moves inside the commanded path due to acceleration/deceleration delay and servo motor delay at Pa to Pb. And, it overshoots at Pb to Pc and moves outside of the commanded path. Hereinafter, the same applies to Pc to Pd, Pd to Pe, and the like. The drawing path is represented as a path with the error multiplied by k (here, k=2) added to the commanded path. The drawing path is continuous.

Regarding the actual positions, since the measurement data from the measurement device 6 usually include measurement errors, averaging can be performed. (FIG. 20) There are various conventional methods of averaging such as weighted average and approximation by the least squares method. For example, let Qn-2', Qn-1', Qn', Qn+1', Qn+2' be the measurement positions themselves sent from the measurement device 6 and let the focused point be Qn'. Based on these five points, a quadratic curve (the one-dot chain line in FIG. 20) in which the distance from the five points is the shortest by the least squares method is created. Let the point at the shortest distance from the focused point Qn' to the quadratic curve be the actual position (Qn) of the focused point Qn'. The actual positions are similarly obtained for the other measurement positions and are used as the above-mentioned actual positions. By correcting the measurement positions to the actual positions as such, the deviation of the actual positions for the measurement errors can be reduced.

2. Embodiment example 2

<Configuration>

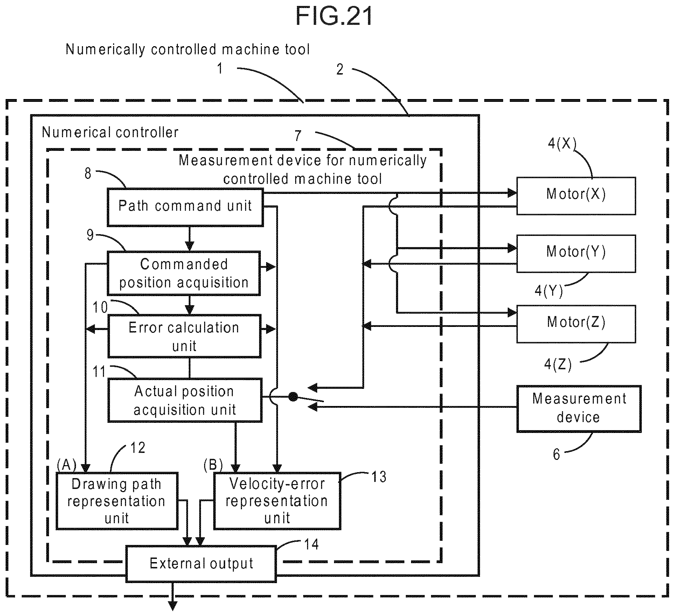

The measurement device for numerically controlled machine tools 7 is configured in the numerical controller 2. In FIG. 21, the machine tool 3 and the measurement device 6 are the same as those in the embodiment example 1 and are therefore omitted. The actual position acquisition unit 11 in the measurement device for numerically controlled machine tools 7 acquires the feedback position from the motor 4 (4 (X), 4 (Y), 4 (Z)) or the actual position from the measurement device 6. Since the relationships between the other respective parts, such as the path command unit 8 and the commanded position acquisition unit 9, are the same as those in the embodiment example 1, the description thereof will be omitted. When the actual position acquisition unit 11 acquires the feedback position from the motors 4(X) 4(Y) 4(Z), the present invention can be configured without the measurement device 6. In addition, the feedback position can be acquired not from the motors 4 but from the scale attached to the machine tool 3. These points are the same in the later embodiments.

The commanded path in the embodiment example 2 is an O curve based on a countable infinite tree. The countable infinite tree and the O curve are a new algorithm and a new curve which have not been in the prior art, therefore they are described in detail, as follows.

< Countable infinite tree>

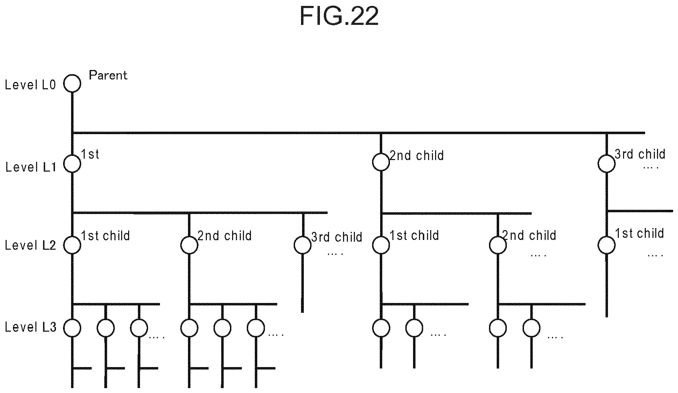

The countable infinite tree is a tree in which infinitely countable nodes are created from one node. As shown in FIG. 22, the hierarchy of the first parent(parent node) is called level L0, the hierarchy of its children is called level L1, and the hierarchy of its children(grandchildren) is called level L2 , , ,. From the parent node at the level L0, the countable infinite number child nodes are created at the level L1, like the first child node, the second child node, and so on, as shown by the solid line. And from each child node of the level L1, the countable infinite number child nodes(grandchild nodes) are created, repeating at each node in each level. It is sometimes called simply L0, L1 , , , without being referred to as level L0, level L1 , , ,.

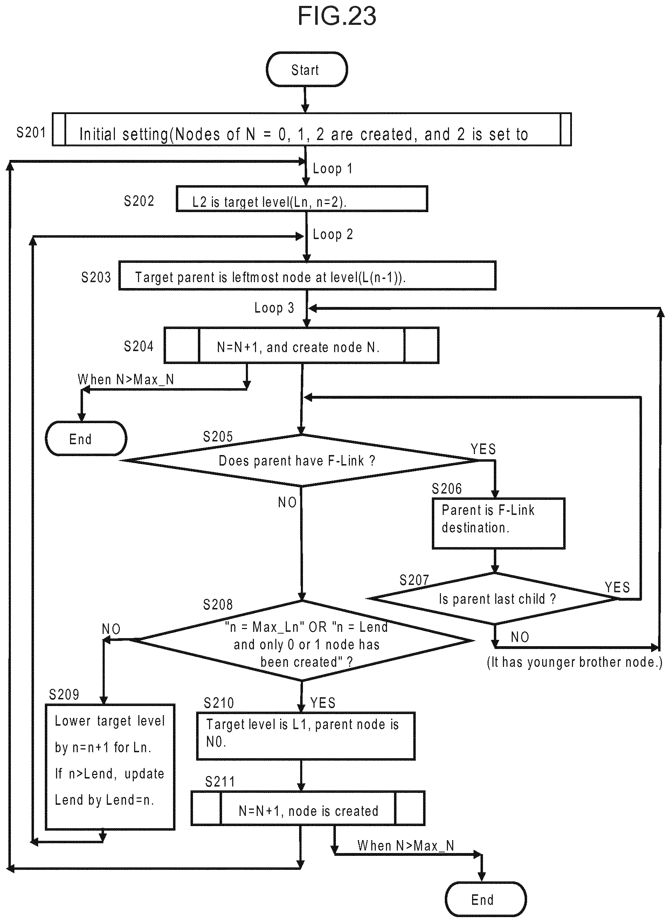

Each node of the tree is numbered sequentially by the infinitely countable number (N = 0, 1, 2, 3, ...), in accordance with the algorithm shown in the flowchart of FIG 23. The node numbered with N will be called simply the node N. The algorithm is described with reference to the flowchart of FIG. 23, as follows.

(STEP S201) As the initial setting, the nodes of N = 0, 1, 2 are created and 2 is set to N as the initial N. Here, the first parent is node 0, the first child of node 0 is node 1, and the second child is node 2.

(STEP S202) Let L2 be the target level(Ln, n=2). The target level is the level at which the nodes are about to be created.

(STEP S203) Let the leftmost node at the level(L(n-1)) immediately above the target level (Ln, n = 2, 3, , , ,) be the target parent. The target parent is the parent node for the child nodes being created at the target level.

(STEP S204) Let N = N + 1 and create the node N. In other words, create the node N under the target parent. If there is already a node, add it to the right of the existing node. If there is no node, it is created as the first child node. However, when N>Max_N, the process ends. Max_N is the maximum N that is preset.

(STEP S205) It is checked whether the parent node has F-Link. If there is, go to STEP S206, otherwise go to STEP S208. F-Link is a link to the right adjacent node in the same level, which will be described later.

(STEP S206) Let the node of the F-Link destination be the parent node, and go to STEP S207.

(STEP S207) It is checked whether the parent node(the node of F-Link destination) is the last child. If it is the last child, the process returns to step S205. That is, STEP S205 is repeated with respect to the F-Link destination node, and the parent node for the node creation at the same level is searched for. If it is not the last child (if there is a right adjacent node, a younger brother node), the process goes to STEP S204. That is, the process continues to create nodes on the same level for the parent node(F-Link destination node).

(STEP S208) About "n" of the target level Ln, check if "n = Max_Ln" OR "n = Lend and only 0 or 1 node has been created" in the level Ln. If YES, the process goes to STEP S210. If NO, the process goes to STEP S209. That is, if the target level is the maximum allowable level (Max_Ln), or only 0 or 1 node has been created at the target level being the final level (Lend), since node creation in the loop 2 (loop starting from STEP S203) has ended, the process returns to creating a node at level L1. Otherwise, lower the target level. Max_Ln is a preset maximum allowable level(allowable maximum value for n of Ln).

(STEP S209) Lower the target level by one level. That is, let n be n+1 for Ln. If the lowered level n is greater than the final level (Lend), update Lend by Lend = n. The process goes to STEP S203, and the creation of nodes at the level lowered in the loop 2 (loop starting from step S203) is continued.

(STEP S210) The target level is L1, and the parent is N0, in order to create a node in the level L1 in S211.

(STEP S211) Let N = N + 1, create the node N at the target level (L1), go to STEP S202, and continue loop 1 (loop beginning at step S202) which is the node creation from level L1. However, when N> Max_N, the process ends. Here, the first child is a node which does not have its elder brother node having the same parent. The leftmost is the first child whose parents, whose parents ,,, are all first children. (Leftmost nodes in FIG. 22) The last child is a node which does not have its younger node having the same parent. The final level (Lend) is the largest n among the Ln in which the node(nor nodes) has been created.

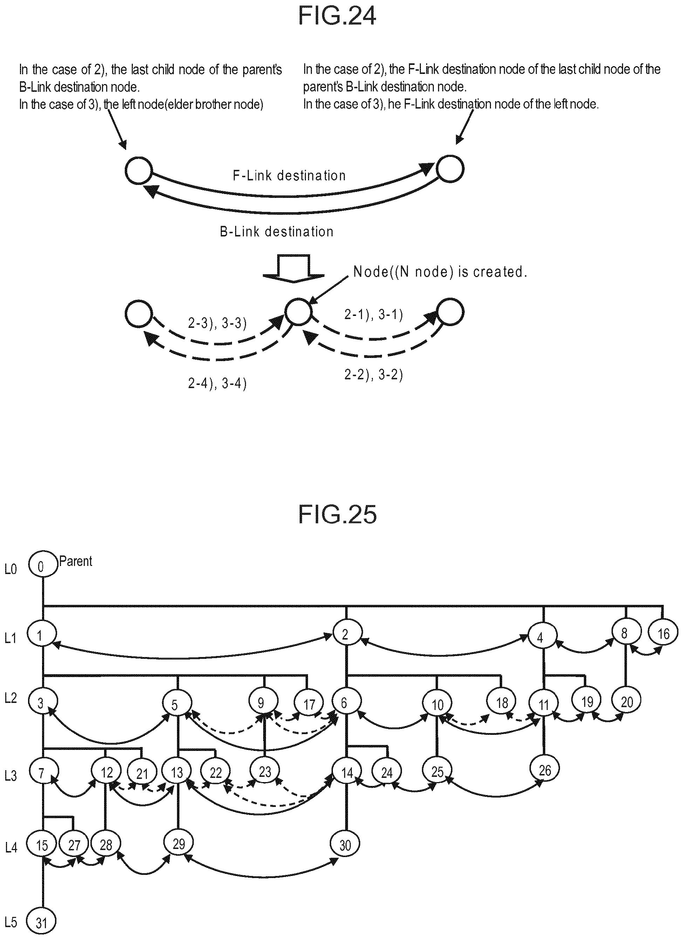

F-Link (forward link) / B-Link (backward link) are explained. F-Link / B-Link are links that make it easy to obtain the same level node number on the right or left side. In the above algorithm, F-Link and B-Link are created as follows. (FIG. 24)

1) When the node to be created (the node N) is the leftmost, do not create F-Link / B-Link. (that is, blank)

2) When the node to be created (the node N) is the first child not at the leftmost,

2-1) Copy the F-Link (sometimes blank) of the last child node of the parent's B-Link destination node(If the destination node has no child node, furthermore search for B-Link destination which has a child node. There must be B-Link destination node having a child node.) to F-Link of the node N to be created. (That is, take over the F-Link destination.)

2-2) Set the node number (N) to B-Link of F-Link destination of the last child. (Change B-Link destination to the node N.) However, if F-Link is blank, do nothing.

2-3) Set the node number (N) to F-Link of the last child node. (Change F-Link of the last child node destination to the node N.)

2-4) Set the number of the last child node to B-Link of the N. (Change B-Link destination of the node N to the last child node.)

3) When the node to be created (the node N) is a node that is neither the leftmost nor the first child,

3-1) Copy F-Link (which may be blank) of the left node (elder brother node on the left) to F-Link of the node N. (that is, take over the F-Link destination.)

3-2) Set the node number (N) to B-Link of F-Link destination node. (Change B-Link of F-Link destination node to the node N.) However, if F-Link is blank, do nothing.

3-3) Set the node number (N) to F-Link of the left(elder) node.

3-4) Set the number of the left(elder) node to B-Link of the node N.

This process is shown in FIG. 24. When creating the node(the node N), the solid arrows (F - Link destination, B - Link destination) are changed as shown by the broken line arrows.

The situation when creating nodes(numbering) up to N=31 is illustrated, as shown in FIG. 25. The inside of a circle is the number of a node. The solid arrows are the F-Link destination and the B-Link destination that were created first. The broken line arrows are the updated F-Link destination and B-Link destination. In FIG. 24, the arrows for F-Link destination and B-Link destination are separately shown, but, in FIG. 25, they are shown by double-headed arrows for convenience of illustration. In this way, each node of the tree can be associated with the countable infinite numbers (N = 0, 1, 2, 3, , , , ).

<O curve>

O curve is a curve that creates circles while repeating inscribing and circumscribing in a circle. Since it is a curve based on a combination of circles, it is called 'O curve', here. O curve is a fractal curve and is a space filling curve.

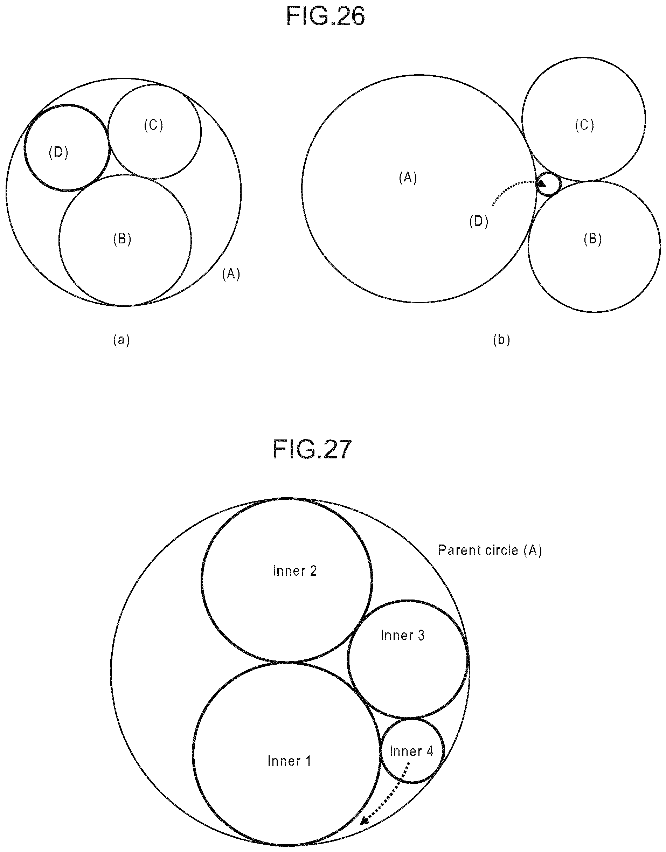

Generally, one circle inscribed or circumscribed with three circles contacting with each other is uniquely determined. Therefore, one circle is created from three circles. (However, except for the inner circle 1 and 2, which will be described later.) Suppose to create a circle D from circle A, circle B, circle C. Hereinafter, (A), (B), (C), (D) indicate circle A, circle B, circle C, circle D (FIGs. 26 (a) and 26 (b)).

Here, a circle group of child series of inner series, outer series a, and outer series b is generated from one parent circle as follows. Such circle making method is known as " Apollonian gasket".

(1) Inner series

Create a circle group of child series inscribed in the parent circle, inner circle 1, inner circle 2, inner circle 3, , , , , as follows. (FIG. 27) Hereinafter, "circle" may be omitted.

- Create inner 1 (D) inscribed in the parent circle (A). (As here is no (B), (C), there are degrees of freedom.)
- Being inscribed in the parent circle (A), create inner circle 2 (D) circumscribed with the inner 1 (B). (For here is no (C) as well, there is a degree of freedom.)
- Being inscribed in the parent circle (A), create inner circle 3 (D) circumscribed with inner 1 (B) and inner 2 (C).
- After that, being inscribed in the parent circle (A), create inner circles (n+1) (D) circumscribed with the inner 1 (B) and the inner n (C).

(2) Outer series a

(2-1) Inner 2 outer series a(which means outer series a of inner 2)

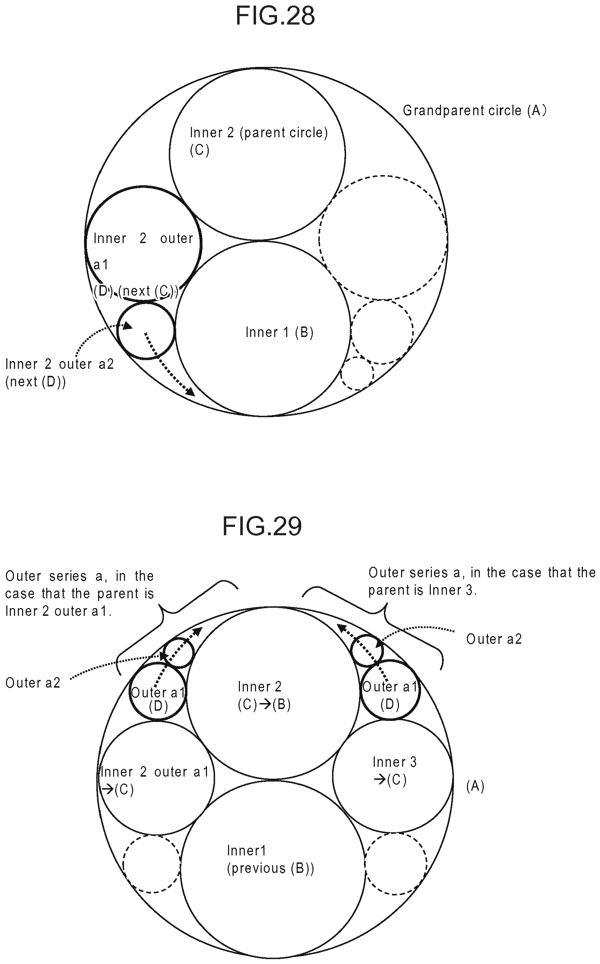

Create a circle group of the child series, inner 2 outer a1, inner 2 outer a2, , , which are circumscribed with elder brother circles from the parent circle, as follows. (FIG. 28)

- Being inscribed in grandfather circle (A) (parent of inner 2), create inner 2 outer a1 (D) which is circumscribed with inner 1 (B) and inner 2 (C).
- After that, create inner 2 outer a(n+1) circle, which means (n+1)-th circle of outer series a of inner 2, inscribed in the grandparent circle (A) and circumscribed with the inner 1 (B) and the inner 2 outer a n (C), which means n-th circle of outer series a of inner 2.

(2-2) outer series a

Create a circle group of child series, outer a1, outer a2 , , , which are circumscribed with the parent circle as follows. (FIG. 29)

- About (A), (B), (C) from which parent circle was created, (C) → (B) (this arrow means to let (C) be (B)) and parent circle → (C) (let parent circle be (C)). The circle of outer a1 (D) is created from (A), (B), (C). ("a" of outer series a means that (A) is kept.)
- About (A), (B), (C) from which the elder brother circle was created, the elder brother circle → (C) (let the elder brother circle be (C)). Here, the elder brother circle is the outer a n-th circle created one time ago in outer series a. The circles after outer a 1 (D) are created as outer a (n+1), which means (n+1)-th circle of outer series a, from (A), (B), (C).

(3) Outer series b

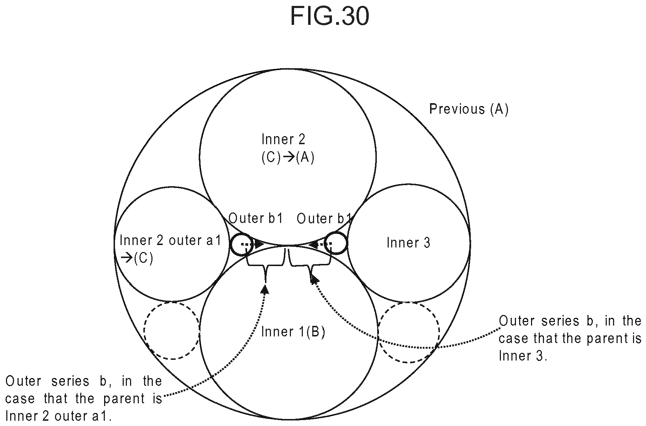

Create a circle group of child series, outer b1, outer b2 , , , which are circumscribed with the parent circle as follows. (FIG. 30)

- About (A), (B), (C) from which parent circle was created, (C) → (A) and parent circle → (C) (let (C) be (A) and let parent circle be (C)). The circle of outside b 1 is created from (A), (B), and (C). ("b" of outer series b means that (B) is kept.)
- For (A), (B), (C) from which the elder brother circle was created, the elder brother circle → (C) (let the elder brother circle be (C)). Here, the elder brother circle is the outer b n-th circle created one time ago in outer series b. The circles after outer b 1 (D) are created as outer b (n+1), which means (n+1)-th circle of outer series b, from (A), (B), (C).

The parent node and the child node of the above-mentioned countable infinite tree correspond to the parent circle and the circle group of the child series of the O curve. The correspondence between the nodes of the countable infinite tree and the circles of the O curve is performed as follows.

1) When the parent circle (parent node) is inner 1

The child nodes correspond only to the circles of inner series. The child nodes correspond to the circles in order of inner 1, inner 2, inner 3, , ,.

2) When the parent circle (parent node) is inner 2

The child nodes correspond to the circles of inner series and outer series a(inner 2 outer series a). The child nodes correspond to the circles in order of inner 1, outer a1, inner 2, outer a2, , ,.

3) When the parent circle (parent node) is other than them

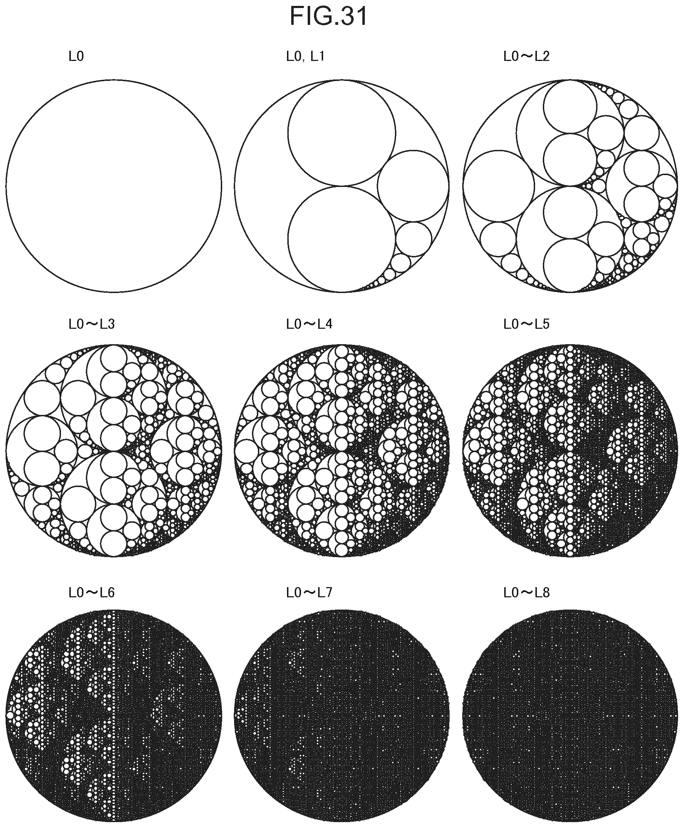

The child nodes correspond to the circles of inner series, outer series a and outer series b. The child nodes correspond to the circles in order of inner 1, outer a1, outer b1, inner 2, outer a2, outer b2, , ,.
As a result, an O curve can be created as shown in FIG. 31. In Fig. 31, drawing is done separately for each level.
In FIG. 31, in order to explain the O curve itself, a small circle is also drawn, but when using it as a commanded path for measuring the movement performance of the machine tool 3, an appropriate threshold for the radius is set, and it is not necessary to create circles having radii under the threshold. When the O curve based on the countable infinite tree is used as the commanded path, there are the following advantages.

i) The O curve can be drawn by one stroke from one circle to another circle which is in contact with the circle. Therefore, circles of various radii can be commanded as one command program (program for the commanded path).
ii) When instructing a circle as the commanded path, the normal direction acceleration is $V^2/r$. V is velocity and r is the radius of a circle. Therefore, being able to command circles having various radii is to be able to command various accelerations. That is, by instructing the O curve as a commanded path, it is possible to measure the movement performance of the machine tool 3 with respect to various accelerations.
iii) When moving from one circle to another circle in contact with the circle, it can be a commanded path of velocity reversal, acceleration change or acceleration reversal. Therefore, by instructing the O curve as the commanded path, when the commanded path shifts from a circle of a certain acceleration to a circle of another acceleration, it is possible to measure the movement performance of the machine tool 3 with respect to the commanded path combining the velocity reversal, the acceleration change and the acceleration reversal. iv) Since the O curve is a space filling curve, it is possible to measure the target measurement area altogether.
v) By appropriately selecting the allowable maximum level (Max_Ln) of the countable infinite tree, it is possible to select a circle group corresponding to the allowable maximum level. (This point will be described in the embodiment example 3.)

The above ii) and iii) are illustrated and explained.

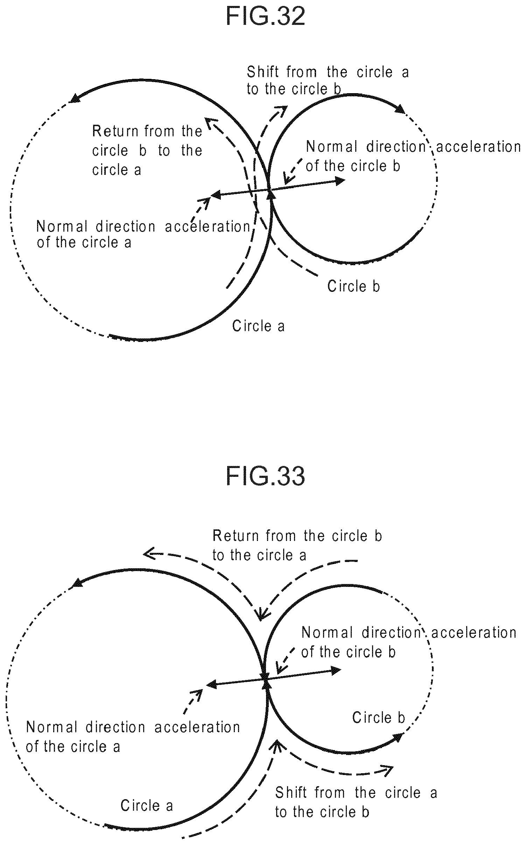

- In Fig. 32, the commanded path is shown by a solid arrow and the shifting direction of the commanded path is shown by a broken line. When shifting from the circle a to the circle b as shown by the broken line, the acceleration direction is reversed from the normal direction acceleration of the circle a to the normal direction acceleration of the circle b, and the acceleration amount (the length of the acceleration arrow) changes. The same is true for returning from the circle b to the circle a.

In FIG. 33, when shifting from the circle a to the circle b as shown by the broken line, the velocity direction is reversed from the velocity direction of the circle a to the velocity direction of the circle b. Also, the direction of acceleration is reversed and the acceleration amount changes. The same is true for returning from circle b to circle a.

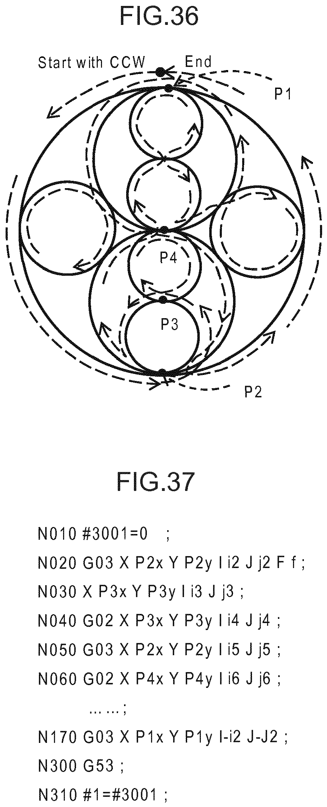

As an example of the command program, create a commanded path which shifts from a circle to another circle as follows.(FIG. 36) In addition to this, various combinations are possible as described above.

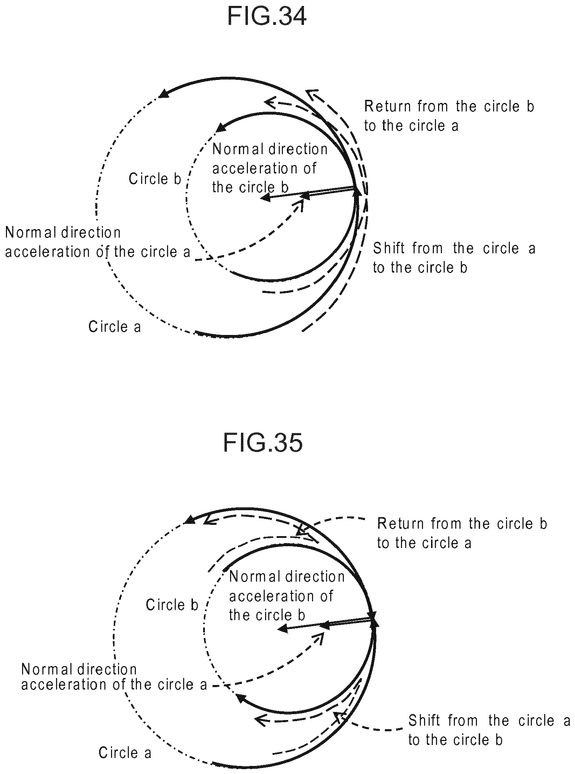

- When shifting or returning to an inscribed circle which is in a level different with odd number (1, 3, , , ,), the velocity reverses and the acceleration changes. (Fig. 35)
- When shifting or returning to an inscribed circle which is in a level different with even number(2, 4, , , ,), the acceleration changes. (FIG. 34)
- When shifting or returning to an circumscribed circle, the acceleration reverses and changes. (FIG. 32)

The solid line in FIG. 36 is the commanded path, and the broken line shows the shifting direction of the commanded path. The commanded path is a partial curve of the above O curve. FIG. 37 shows the command program, and the whole configuration of the program is similar to FIG. 18 of the embodiment example 1, but circular interpolation commands of G 02 / G 03 are instructed. In FIG. 37, only the first part and the last part of the commanded path program are shown. It starts with the CCW command (G03) but can start with the CW command (G02). Then, it becomes the commanded path in the opposite direction.

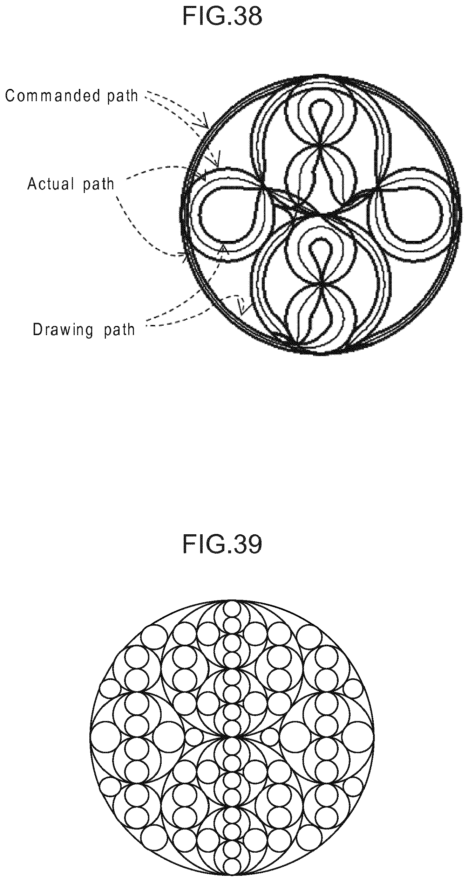

The commanded path, the actual path, and the drawing path are shown in FIG. 38. Also in this example, like the embodiment example 1, the acceleration / deceleration delay, the servo delay, and the overshoot are increased to make the actual path easier to see. Even in this example, the drawing path is continuous.

For convenience of illustration, small circular arcs are not commanded here, but of course it is also possible to command circular arcs smaller than this commanded path. For example, the commanded path can be the path shown in FIG. 39. In FIG. 39, only the commanded path is shown without the actual path and the drawing path. Further, arcs smaller than the arcs shown in FIG. 39 can be commanded. Since the O curve is a space filling curve as described above, it is possible to measure the inside of the largest circle without missing a part of the circle.

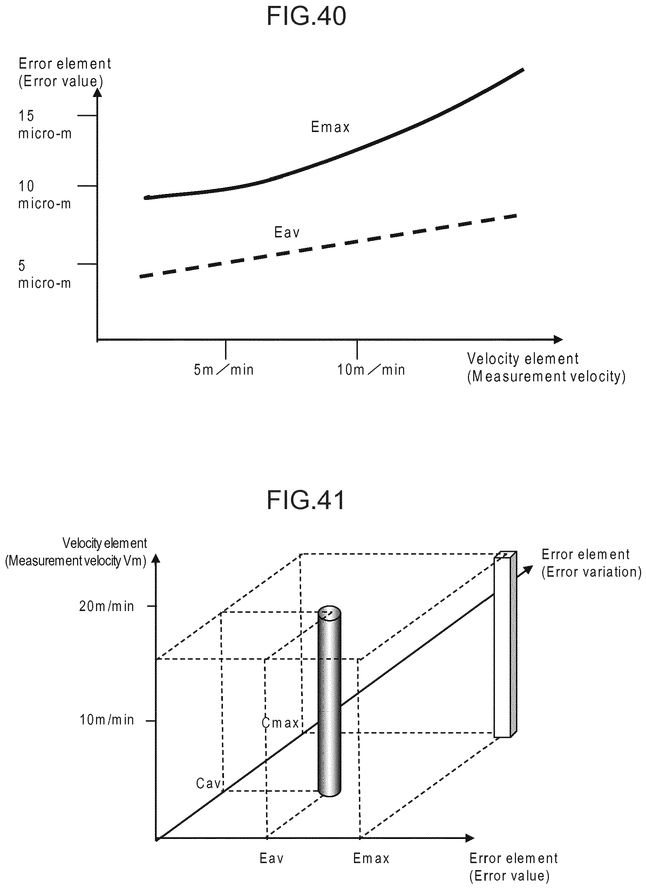

Then, the error element and the velocity element are calculated and the movement performance of the machine tool 3 is represented on at least two dimensions by them. For this point is the same as in the embodiment example 1, its explanation is omitted. Additionally, the relationship between the velocity element and the error element can be represented as an approximate curve. For example, an approximate curve can be created for a plurality of sets (Vm, Eav, Emax) and the like and graphed. FIG. 40 shows an example in which the relationship of (Vm, Eav) (Vm, Emax) is graphed as an approximate curve. This makes it possible to represent the relationship between the velocity element and the error element more characteristically. For creating an approximate curve, there are various methods such as weighted averaging, regression analysis, polynomial approximation by least-square method, and they are conventional techniques and will not be described.

Further, like the embodiment example 1, the value of the evaluation function Fe can be represented. This point is the same as in the embodiment example 1, so its explanation is omitted.

In addition to the velocity element and the error element of the average error and the maximum error, the error element of the error variation for the variation of the average error or the maximum error can be combined and represented on three dimensions as shown in FIG. 41. FIG. 41 shows the relationship between the velocity element (measured velocity Vm) and Eav, Emax and Cav, Cmax. That is, FIG. 41 shows the situation of the measured velocity(Vm: about 15 m / min), the error element(Eav, Emax, Cav, Cmax) when the numerically controlled machine tool 1 is moved by instructing the command program at a commanded feedrate of 20 m/min. In this case, in general, the faster the velocity element (measured velocity) is, and the smaller the error element (amount of the average error or the maximum error, error variation etc.) is, the better the movement performance is.

3. Embodiment example 3

<Configuration>

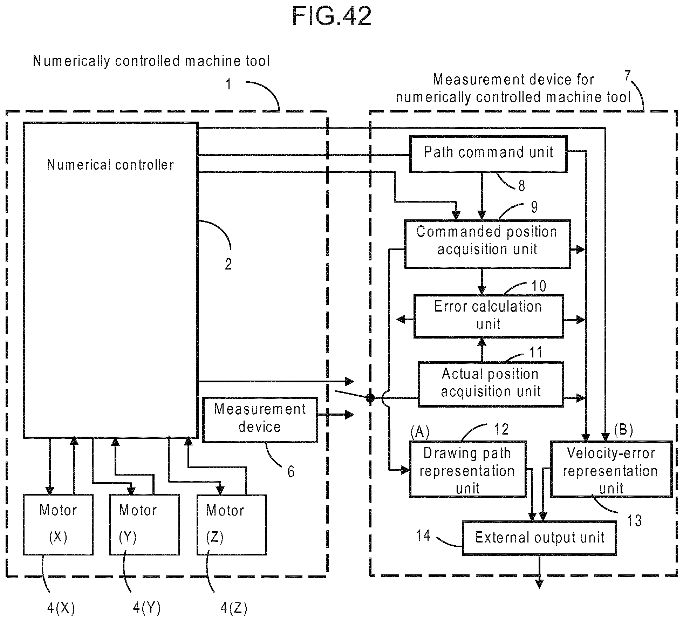

As in the embodiment example 1, the measurement device for numerically controlled machine tools 7 is configured outside the numerical controller 2.(FIG. 42) In FIG. 42, however, the arrows from the respective motors 4 (X) 4 (Y) 4 (Z) to the numerical controller 2 are the feedback positions, and the actual position acquisition unit 11 in the measurement device for numerically controlled machine tools 7 acquires the actual position from feedback positions sent from each motor 4 (X) 4 (Y) 4 (Z) via the numerical controller 2, or from the measurement device 6. The actual position can be acquired from both. Since the machine tool 3 and the measurement device 6 are similar to those of the embodiment example 1, they are omitted. Further, since the other relationships between the respective parts such as the path command unit 8 and the command position acquisition unit 9 are the same as those in the embodiment example 1, the description thereof is omitted.

<Commanded path>

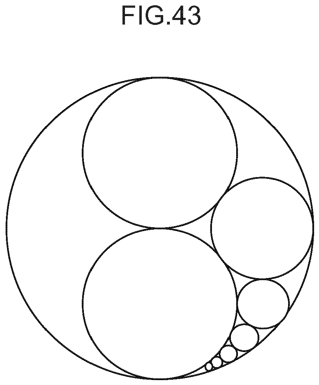

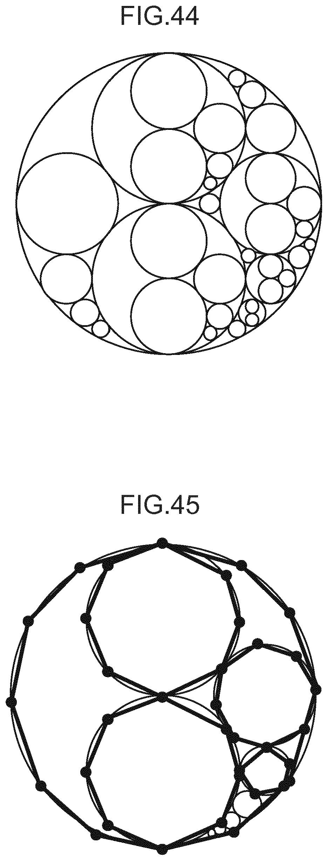

In the commanded path (O curve) of the embodiment example 2, many circles having the same radius are commanded. Therefore, in this embodiment example 3, a circle group (here, referred to as O1 curve) of levels L 0 to L 1 of the O curve which is a partial curve of the O curve is used as a commanded path. Alternatively, a circle group (here, referred to as O 2 curve) of levels L 0 to L 2 of the O curve which is also a partial curve of the O curve can be used as a commanded path. The O1 curve is obtained by setting Max_Ln = 1 in STEP S208 of FIG 23. Similarly, the O 2 curve is obtained by setting Max_Ln = 2. Of course, the commanded path can be created with partial curves according to other conditions. Also, in machining free-form surfaces, there are few cases where velocity reversal occurs in the commanded path. Therefore, in this embodiment example 3, when moving from a circle to another circle in the embodiment example 2, the velocity is not reversed and only the acceleration is changed and the acceleration is reversed. (FIGs. 32 and 34). In this case, there is not a corner described in the embodiment example 1 and the embodiment example 2, so it is not necessary to calculate the error from the long length path to the short path between the commanded path and the actual path in the error calculation unit 10. It is sufficient to calculate the error from the actual path to the commanded path. That is, in this embodiment example 3, the error calculation unit 10 and the drawing path representation unit 12 are equivalent to the conventional technology, and, therefore, the velocity-error representation unit 13 has the advantage. In FIGs. 43 and 44, the commanded paths of the O1 curve and the O2 curve are shown.

In this embodiment example 3, it is possible to more easily measure the movement performance by various circles.

Alternatively, the commanded path can be a curve composed of line segments taking point sequences on O curves (including partial curves of O curves, such as O1 curve and O2 curve) and connecting the point sequences by line segments. For example, FIG. 45 shows an example in which a curve consisting of line segments taking a point sequence on the O 1 curve is used as the commanded path. The bold solid line is the commanded path. (For the sake of illustration, a point sequence and line segments on small circles are not drawn.) Thus, a curve obtained by connecting a point sequence taken on the O curve or a its partial curve by line segments is referred to as a line segment O curve.

Alternatively, a machining program itself can be commanded as the commanded path.

4. Embodiment example 4

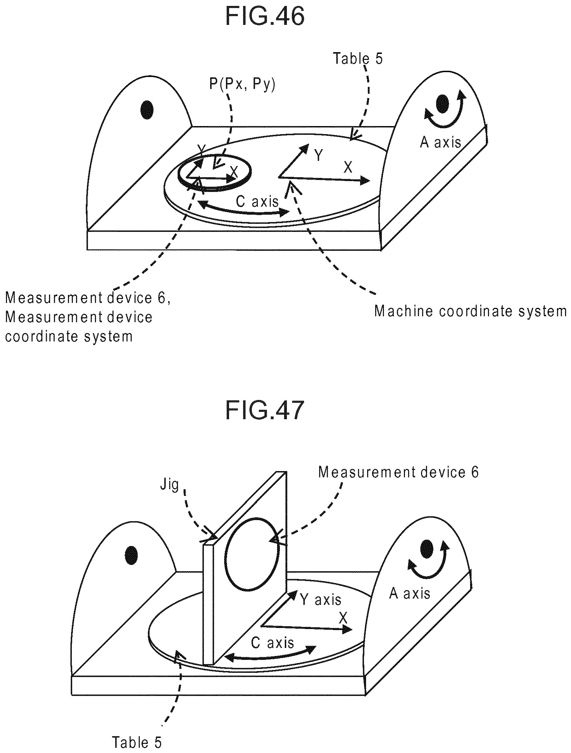

In this embodiment example 4, the configurations and the commanded paths of the embodiment example 1, the embodiment example 2, or the embodiment example 3 are applied to the machine tool 3 of the table rotating type five-axis machine. Since the configuration and commanded paths are the same as those described in the embodiment example 1, the embodiment example 2, or the embodiment example 3, the explanation for those is omitted. However, with regard to the configuration, the motor 4 has five axes with two rotary axes (A and C axes in this example) in addition to the X, Y and Z axes. FIG. 46 shows a structure of the table 5 of a table rotating type 5-axis machine in which the table 5 has the A axis as the tilt axis and the C axis as the rotation axis above it. Although the structure has two rotary axes in this embodiment example 4, it is enough for the invention that the machine tool 3 has at least one linear axis and one rotary axis.

The measurement device 6 is installed on the table 5 rotating on the C axis. For example, an O 2 curve is commanded as the commanded path on the measurement device coordinate system which is a coordinate system on the measuring device 6. Let the commanded position on the O2 curve be P(Px, Py), and let the table rotation center position on the measurement device coordinate system be (cx, cy). Suppose there is the machine coordinate system at the table rotation center. Initially, the measurement device coordinate system and the machine coordinate system are parallel.

(Px, Py) is converted to (X, C) by the expression 17 by CAM out of the numerical controller 2, and the machine tool 3 is moved by commanding the position X for the X axis of the machine coordinate system and the position C for the C axis to the numerical controller 2. Alternatively, if the numerical controller 2 has the function of performing this conversion (generally called polar interpolation), the conversion and command can be performed by the numerical controller 2.

$$X = \sqrt{(Px - cx)^2 + (Py - cy)^2}$$

$$C = \arctan\left(\frac{Py - cy}{Px - cx}\right) \qquad\qquad (17)$$

As a result, by the movement of the X axis and the C axis, the machine tool 3 moves on the commanded path of the O 2 curve on the measurement device coordinate system. The measurement position thereof is measured by the measurement device 6, the actual position acquisition unit 11 acquires the measurement position on the measurement device coordinate system, and sets it as the actual position Qn(Qnx, Qny). Since the process after that is the same as the embodiment example 1, the embodiment example 2, or the embodiment example 3, the explanation will be omitted.

As shown in FIG. 47, the measurement device 6 is installed on a jig placed on a table 5 rotating on the C axis, and, similarly, the Y axis and the A axis are instructed instead of the X axis and the C axis, and the actual position is measured and acquired.

Thus, in the machine tool 3 having the linear axis and the rotary axis, it is possible to measure the movement performance of the machine tool 3 when moving a linear axis and a rotary axis in combination.

5. Embodiment example 5

In recent years, the research and development of the measurement device 6 for measuring the three-dimensional measurement position by three axes (X, Y, Z axis) are progressing. Also, from the feedback position from the motor 4 or the feedback position from the scale attached to the machine tool 3, the measurement position by three axes (X, Y, Z axis) can be measured. Alternatively, by installing the measuring device 6 on the jig, the three-dimensional measurement position can be measured even with the two-dimensional measurement device 6. In this embodiment example 5, the configurations and commanded paths of the embodiment example 1, the embodiment example 2, or the embodiment example 3 are applied to the machine tool 3 having at least orthogonal three axes. Since the configuration is the same as the configuration described in the embodiment example 1, the embodiment example 2, or the embodiment example 3, the explanation is omitted.

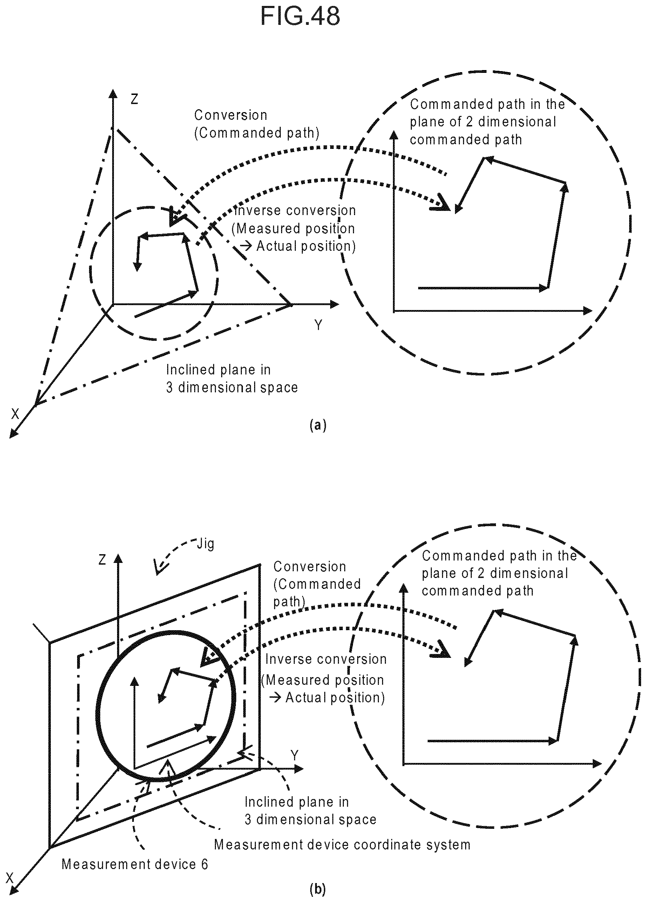

As shown in FIG. 48 (a) or (b), by converting the commanded path on the two-dimensional commanded path plane into an inclined plane in the three-dimensional space (one-dot chain line in FIG. 48), the three axes of X, Y, and Z axes on the inclined plane in the three-dimensional space are instructed. FIG. 48 (a) shows an example of an inclined plane of $a*X + b*Y + c*Z = d$, and FIG. 48 (b) shows an example of an inclined plane of $e*X + f*Y = g$.(a, b, c, d, e, f, g are constants) In FIG. 48 (b), the X, Y, Z axes move on the commanded path on the inclined plane parallel to the two-dimensional measurement device 6, but the movement of the X, Y, Z axes is measured by the measurement device 6 as two-dimensional movement on the measurement device coordinate system. That is, the measurement position is measured as a two-dimensional position on the measurement device coordinate system which is a two-dimensional coordinate system on the measurement device 6.

In FIG. 48 (a), the three-dimensional measurement position by three axes (X, Y, Z axis) is inversely converted into the two-dimensional commanded path plane to be the actual position. In FIG. 48 (b), the two-dimensional measurement position on the measurement device coordinate system is inversely converted into the two-dimensional commanded path plane to be the actual position. These transformations and inverse transformations are conventional techniques and will not be described in detail. Since the process after that is the same as the embodiment example 1, the embodiment example 2, or the embodiment example 3, the explanation will be omitted.

Accordingly, it is possible to measure the movement performance of the machine tool 3 having at least three orthogonal axes for simultaneous three axes movement of the X, Y, and Z axes.

<Explanation of the numbers of parts>

    1 : Numerically controlled machine tool
    2 : Numerical controller
    3 : Machine tool
    4 : Motor
    4(X) : X axis motor

4(Y) : Y axis motor
4(Z) : Z axis motor
5 : Table
6 : Measurement device
7 : Measurement device for numerically controlled machine tool
8 : Path command unit
9 : Commanded position acquisition unit
10 : Error calculation unit
11 : Actual position acquisition unit
12 : Drawing path representation unit
13 : Velocity-error representation unit
14 : External output unit

## Claims

1. A measurement device for numerically controlled machine tools, which measures movement performance of a machine tool controlled by a numerical controller, the measurement device for numerically controlled machine tools comprising:

   a path command unit that commands a commanded path to the numerical controller for movements of the machine tool;
   a commanded position acquisition unit that acquires commanded positions on the commanded path at discrete times or commanded positions commanded on the commanded path;
   an actual position acquisition unit that acquires actual positions at discrete times as a result of movements of the machine tool for the commanded path; and
   an error calculation unit that makes a commanded path by connecting the commanded positions and an actual path by connecting the actual positions, compares a commanded path's length and an actual path's length, calculates errors from the actual positions to the commanded path when the actual path's length is longer than the commanded path's length, and calculates errors from the commanded positions to the actual path when the commanded path's length is longer than the actual path's length.

2. A measurement device for numerically controlled machine tools according to claim 1, further comprising a drawing path representation unit for displaying a drawing path obtained by magnifying error vectors between the commanded path and the actual path by a predetermined magnification rate and adding magnified error vectors to the commanded path.

3. A measurement device for numerically controlled machine tools according to claim 1, further comprising a velocity-error representation unit that calculates a velocity element by measuring the time as a result of the machine tool's movement with respect to the commanded path and calculates an error element from an error vector between the commanded path and the actual path, and represents at least two dimensional velocity-error data in at least two-dimensional coordinate system or calculates and represents an evaluation function which is a function including the velocity element and the error element.

4. A measurement device for numerically controlled machine tools according to claim 3, wherein the velocity element is a measurement time for the movement of the numerically controlled machine tool, or a measurement velocity obtained by dividing the commanded path's length by the measurement time.

5. A measurement device for numerically controlled machine tools according to claim 3, wherein the error element is an average error, which is the average of the lengths of the error vectors, a maximum error, which is the maximum value of the lengths of the error vectors, a standard deviation error, which is a standard deviation of the lengths of the error vectors, an average error variation, which is the average value of error variation amounts that are variation amounts of error vectors with respect to the commanded path, or a maximum error variation, which is the maximum value of the error variation amounts.

6. A measurement device for numerically controlled machine tools according to any one of claim 1 to claim 3, wherein the actual position is a position obtained by averaging measured positions at discrete times as a result of the machine tool's movement with respect to the commanded path.

**7.** A measurement device for numerically controlled machine tools according to any one of claim 1 to claim 6, wherein the commanded path includes a line segment spiral connecting line segments on a spiral, an O curve formed of a plurality of circles created by repeating inscribing and circumscribing in one circle or a partial curve of the O curve, or a line segment O curve obtained by connecting a point group taken on the O curve or the partial curve of the O curve with line segments

**8.** A measurement device for numerically controlled machine tools according to any one of claim 1 to claim 7, wherein the machine tool is a machine tool having at least two linear axes, or at least one linear axis and one rotary axis.

FIG.1

Error element

15 micro-m

Velocity command

Max. error    F5000

10 micro-m

5 micro-m

Ave. error

F10000

F20000

5m/min          10m/min

Velocity element
(Measured velocity)

# FIG.2

Numerically controlled machine tool
1

Measurement device for
numerically controlled machine tool
7

Numerical controller

2

Machine tool  3

Z axis

Motor

Machining part

Spindle

6
Measurement device

Y axis

X axis

5

Table

Motor

4

Path command unit

8

Commanded position acquisition unit

9

Error calculation unit

10

Actual position acquisition unit

11

(A)
Drawing path representation unit

12

(B)
Velocity-error representation unit

13

External output unit

14

# FIG.3

# FIG.4

```
                              ( Start )
```

S101
Commanded position acquisition unit acquires commanded positions(P1, P2, ... Pm, Pm+1, ...

S102
Actual position acquisition unit acquires actual positions(Q1, Q2, ... Qn, Qn+1,... Qqe).

Error calculation unt

S103   Initial intersection is R1(=P1=Q1). j=k=1

S105
i=i+1

S104   Does line L(Qj,Qj+1) have an intersection with line L(Pm,Pm+1) (m=2,3,...,pe-1) ?

NO

YES

S106
Rp=Rk and Rp is previous intersection. k=k+1 and Rk is next intersection.
Between Rp and Rk, commanded positions are Pm,Pm+1,...Pme, and actual positions are Qn,Qn+1,...Qne. Command path's length Lp is calculated by $Lp=|L(Rp,Pm)|+|L(Pm,Pm+1|)+...+|L(Pme,Rk)|$, Actual path's length Lq. is calculated by $Lq=|L(Rp,Qn)|+|L(Qn,Qn+1)|+...+|L(Qne,Rk)|$.

S107   $Lq \geq Lp$ ?

YES

NO

S108   (I)
Nearest positions from actual positions (Qn,Qn+1,...Qne) to command path (L(Rp,Pm),L(Pm,Pm+1),,,L(Pme,Rk) are calculated. Error vectors (Ve(Qn), Ve(Qn+1),,,) are calculated from the nearest positions to actual positions.

S109   (II)
Nearest positions from commanded positions (Pm,Pm+1,...Pme) to actual path (L(Rp,Qn), L(Qn,Qn+1),...,L(Qne,Rk) are calculated. Error vectors (Ve(Pm),Ve(Pm+1),,,) are calculated from commanded positions to the nearest

S110
Drawing positions (En,En+1,...Ene)
= nearest positions+k*(error vectors)
Rp – (drawing positions) – Rk are represented.

S111
Drawing positions(Em,Em+1,...Eme)
= commanded positions+k*(error vectors)
Rp – (drawing positions) – Rk are represented.

S112
Total error area(Se), total command path's length(Ls), max. error(Emax) and data for standard deviation are calculated. Total error variation(Sc), max error variation(Cmax) are calculated.

S113
Total error area(Se), total command path's length(Ls), max. error(Emax) and data for standard deviation are calculated. Total error variation(Sc), max error variation(Cmax) are calculated.

S114   Rk=Ppe(=Qqe)?

NO

YES

( 1 )

# FIG.5

(1)

S115

Average error, standard deviation error and measurement velocity are calculated.
Average error variation is calculated.

S116

Error element is average error, max error or standard deviation error.
Or, error element is average error variation or max error variation.
Velocity element is measurement velocity or measurement time.
Performance of the numerically controlled machine tool is represented on at least two dimensions of velocity element and error element.
Or, evaluation function which is a function including velocity element and error element is calculated and represented.

End

# FIG.6

Actual path's length Lq

Error vectors

Ve(Qn)

Ve(Qne)

Qn+1

Qn+2

Qne

Qn

Ve(Qn+1)

Ve(Qn+2)

Intersection Rp

Intersection Rk

Pm

Un

Pm+1

Pm+2

Pm+3

Pme

Un+1

Un+2

Un+3

Nearest positions

Commanded pat's length Lp

# FIG.7

Commanded path's length Lp

Error vectors

Ve(Pm+1)  Pm+2

Pm+1

Ve(Pm)  Ve(Pm+3)

Pm+3

Ve(Pm+2)  Ve(Pme)

Pm

Intersection Rp

Qn+1

Qn  Qn+2  Pme

Um+1  Um+2

Um  Qn+3  Intersection Rk

Nearest positions  Ume  Qne

Actual path's length Lq

# FIG.8

Error vector at corner cannot be obtained.

Nearest positions

Error vectors are discontinuous and incorrect as values.

Pm+2

Nearest positions

Pm+1

Pm+3

Pm

Qn+1  Pme

Qn  Qn+2

Qn+3

Error vectors  Qne

# FIG.9

Case of (I)

Drawing positions

Drawing path

En+1    En+2

En                    Ene

Qn+1    Qn+2    Qne

Qn

Intersection Rp    Un+1    Un+2    Une    Intersection Rk

Un    Pm+1    Pm+2    Pm+3    Pme

Pm

# FIG.10

Case of (II)

Um+2

Pm+2

Um+1    Um+3

Pm+1    Ume

Um

Pm+3

Pm    Qn+1    Qn+2

Qn    Qn+3

Intersection Rp    Pme

Em    Em+1    Qne

Em+2    Drawing path    Eme    Intersection Rk

Em+3

Drawing positions

## FIG.11

## FIG.12

## FIG.13

Error element
(Error value)

15 micro-m

10 micro-m

5 micro-m

F5000
Emax
Eσ
Eav

F10000

F20000

5m/min

10m/min

Velocity element
(Measurement velocity)

## FIG.14

Error element
(Error variation)

F20000
Cmax

0.015

0.01

Cav

0.005

F10000

F5000

1min

2min

Velocity element
(Measurement time)

FIG.15

FIG.16

# FIG.17

# FIG.18

N010 #3001=0   ;

N020 G01 X P2x Y P2y F f ;

N030 X P3x Y P3y ;

N040 X P4x Y P4y ;

N050 X P5x Y P5y ;

N060 X P6x Y P6y ;

N070 X P7x Y P7y ;

N080 G53 ;

N090 #1=#3001 ;

# FIG.19

P4(P4x,P4y)

Pf          Pe

Pg                              Pd          P3(P3x,P3y)

P5(P5x,P5y)          P7(P7x,P7y)          Pc

Ph                                          Drawing path

Pi          Pi                              Actual path

P6(P6x,P6y)                Pb                Commanded path

Pa

P1(P1x,P1y)                P2(P2x,P2y)

# FIG.20

Qn+2'

Qn

Qn+1'

Qn-1'          Qn'

Qn-2'

# FIG.21

Numerically controlled machine tool

FIG.22

Level L0 ◯ Parent

Level L1 ◯ 1st ... ◯ 2nd child ... ◯ 3rd child ... .

Level L2 ◯ 1st child ... ◯ 2nd child ... ◯ 3rd child ... . ◯ 1st child ... ◯ 2nd child ... . ◯ 1st child ... .

Level L3 ◯ ◯ ◯ ... . ◯ ◯ ◯ ... . ◯ ◯ ... . ◯ ◯ ... .

# FIG.23

```
                          ┌─────────┐
                          │  Start  │
                          └────┬────┘
                               │
     S201 ┌──────────────────────────────────────────────────────────┐
          │ Initial setting(Nodes of N = 0, 1, 2 are created, and 2 is set to │
          └──────────────────────────────────────────────────────────┘
                                    Loop 1
          S202    ┌───────────────────────────────────┐
                  │ L2 is target level(Ln, n=2).      │
                  └───────────────────────────────────┘
                                    Loop 2
          S203   ┌─────────────────────────────────────────────┐
                 │ Target parent is leftmost node at level(L(n-1)). │
                 └─────────────────────────────────────────────┘
                                    Loop 3
          S204   ┌───┬──────────────────────────┬───┐
                 │   │ N=N+1, and create node N.│   │
                 └───┴──────────────────────────┴───┘
     When N>Max_N
          ┌─────────┐
          │   End   │        S205
          └─────────┘   Does parent have F-Link ?           YES
                                                             │
                              NO               S206  ┌──────────────────┐
                                                     │ Parent is F-Link  │
                                                     │ destination.      │
                                                     └──────────────────┘
                        S208                   S207   Is parent last child ?   YES
                   "n = Max_Ln" OR "n = Lend
              NO   and only 0 or 1 node has
                        been created" ?              NO
                                                (It has younger brother node.)
          S209                   S210    YES
     ┌──────────────┐      ┌────────────────────────┐
     │ Lower target level│  │ Target level is L1, parent node is │
     │ by n=n+1 for Ln. │  │ N0.                    │
     │ If n>Lend, update │  └────────────────────────┘
     │ Lend by Lend=n.  │      S211  ┌───┬────────────────────┬───┐
     └──────────────┘           │   │ N=N+1, node is created │   │
                                └───┴────────────────────┴───┘
                                        When N>Max_N
                                                   ┌─────────┐
                                                   │   End   │
                                                   └─────────┘
```

# FIG.24

In the case of 2), the last child node of the parent's B-Link destination node.
In the case of 3), the left node(elder brother node)

In the case of 2), the F-Link destination node of the last child node of the parent's B-Link destination node.
In the case of 3), he F-Link destination node of the left node.

F-Link destination

B-Link destination

Node((N node) is created.

2-3), 3-3)
2-1), 3-1)
2-4), 3-4)
2-2), 3-2)

# FIG.25

# FIG.26

(a)

(b)

# FIG.27

Parent circle (A)

Inner 2

Inner 3

Inner 1

Inner 4

# FIG.28

Grandparent circle (A)

Inner 2 (parent circle) (C)

Inner 2 outer a1 (D')(next (C)))

Inner 2 outer a2 (next (D))

Inner 1 (B)

# FIG.29

Outer series a, in the case that the parent is Inner 2 outer a1.

Outer series a, in the case that the parent is Inner 3.

Outer a2

Outer a2

Outer a1 (D)

Inner 2 (C)→(B)

Outer a1 (D)

Inner 2 outer a1 →(C)

Inner 3 →(C)

(A)

Inner1 (previous (B))

# FIG.30

Previous (A)

Inner 2
(C)→(A)

Outer b1    Outer b1

Inner 2 outer a1
→(C)

Inner 3

Inner 1(B)

Outer series b, in the
case that the parent is
Inner 3.

Outer series b, in the
case that the parent is
Inner 2 outer a1.

# FIG.31

L0

L0, L1

L0~L2

L0~L3

L0~L4

L0~L5

L0~L6

L0~L7

L0~L8

# FIG.32

Shift from the circle a
to the circle b

Return from the
circle b to the
circle a

Normal direction acceleration
of the circle b

Normal direction acceleration
of the circle a

Circle b

Circle a

# FIG.33

Return from the circle b
to the circle a

Normal direction acceleration
of the circle b

Normal direction acceleration
of the circle a

Circle b

Circle a

Shift from the circle a
to the circle b

## FIG.34

Return from the circle b
to the circle a

Normal direction
acceleration of
the circle b

Circle b

Normal direction
acceleration of the circle a

Shift from the circle a
to the circle b

Circle a

## FIG.35

Return from the circle b
to the circle a

Normal direction
acceleration of
the circle b

Circle b

Normal direction
acceleration of the circle a

Shift from the circle a
to the circle b

Circle a

# FIG.36

Start with CCW    End

P1

P4

P3

P2

# FIG.37

N010 #3001=0   ;

N020 G03 X P2x Y P2y I i2 J j2 F f ;

N030 X P3x Y P3y I i3 J j3 ;

N040 G02 X P3x Y P3y I i4 J j4 ;

N050 G03 X P2x Y P2y I i5 J j5 ;

N060 G02 X P4x Y P4y I i6 J j6 ;

        ... ... ;

N170 G03 X P1x Y P1y I-i2 J-J2 ;

N300 G53 ;

N310 #1=#3001 ;

FIG.38

Commanded path

Actual path

Drawing path

FIG.39

# FIG.40

# FIG.41

# FIG.42

Numerically controlled machine tool

1

Measurement device for 7
numerically controlled machine tool

Numerical controller

2

Path command unit

8

9

Commanded position
acquisition unit

10

Error calculation
unit

11

Actual position
acquisition unit

Measurement
device

6

(A) 12

Drawing path
representation
unit

(B)

Velocity-error
representation
unit

13

14 External output unit

Motor
(X)

Motor
(Y)

Motor
(Z)

4(X) 4(Y) 4(Z)

FIG.43

FIG.44

FIG.45

## FIG.46

Table 5

P(Px, Py)

A axis

Y

Y   X

X

C axis

Measurement device 6,
Measurement device
coordinate system

Machine coordinate system

## FIG.47

Jig

Measurement device 6

A axis

Y axis

X

C axis

Table 5

# FIG.48

Z

Conversion
(Commanded path)

Inverse conversion
(Measured position
→ Actual position)

Commanded path in the
plane of 2 dimensional
commanded path

Y

Inclined plane in
3 dimensional space

X

(a)

Jig

Z

Conversion
(Commanded
path)

Inverse conversion
(Measured position
→ Actual position)

Commanded path in the
plane of 2 dimensional
commanded path

Y

Inclined plane in
3 dimensional space

Measurement device coordinate system

Measurement device 6

X

(b)

## INTERNATIONAL SEARCH REPORT

International application No.

PCT/JP2017/032869

### A. CLASSIFICATION OF SUBJECT MATTER
Int.Cl. G05B19/4063(2006.01)i, B23Q17/22(2006.01)i, G05B19/18(2006.01)i

According to International Patent Classification (IPC) or to both national classification and IPC

### B. FIELDS SEARCHED

Minimum documentation searched (classification system followed by classification symbols)
Int.Cl. G05B19/4063, B23Q17/22, G05B19/18

Documentation searched other than minimum documentation to the extent that such documents are included in the fields searched

| | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5149421 B2 (FANUC LTD.) 20 February 2013, paragraphs [0023]-[0038], fig. 10<br>& US 2012/0296462 A1, paragraphs [0053]-[0091], fig. 10<br>& JP 2012-243152 A & DE 102012009461 A1 & CN 102789194 A | 1-8 |
| A | JP 4676549 B2 (FANUC LTD.) 27 April 2011, paragraph [0032], fig. 7, 8<br>& US 2011/0057599 A1, paragraph [0041], fig. 7, 8<br>& JP 2011-60016 A & DE 102010044534 A1 & CN 102019564 A | 1-8 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 November 2017 | 05 December 2017 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet)(January 2015)

**INTERNATIONAL SEARCH REPORT**

International application No.

PCT/JP2017/032869

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5127934 B2 (MITSUBISHI ELECTRIC CORPORATION) 23 January 2013, paragraph [0064], fig. 11 <br> & US 2011/0246132 A1, paragraph [0079], fig. 11 <br> & WO 2010/067651 A1 & CN 102245349 A | 1-8 |
| A | JP 2013-257809 A (FANUC LTD.) 26 December 2013, paragraph [0026], fig. 3, 4 <br> & US 2013/0338816 A1, paragraph [0039], fig. 3, 4 <br> & DE 102013106076 A1 & CN 103513610 A | 1-8 |
| A | JP 2013-45332 A (FANUC LTD.) 04 March 2013, paragraphs [0045]-[0053], fig. 6-9 <br> & US 2013/0054182 A1, paragraphs [0060]-[0068], fig. 6-9 <br> & DE 102012016434 A1 & CN 102955449 A | 1-8 |
| A | JP 2012-221309 A (FANUC LTD.) 12 November 2012, paragraphs [0028]-[0031], fig. 8-12 <br> & US 2012/0257276 A1, paragraphs [0061]-[0066], fig. 8-12 <br> & DE 102012103075 A1 & CN 102736555 A | 1-8 |
| A | JP 2011-192017 A (OMRON CORPORATION) 29 September 2011, paragraphs [0105]-[0153], fig. 15-24 <br> & US 2013/0050276 A1, paragraphs [0178]-[0227], fig. 15-24 <br> & WO 2011/114776 A1 & EP 2549347 A1 & CN 102812407 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5127934 B
- JP 4676549 B
- JP 5149421 B
- JP H11216644 B

**Non-patent literature cited in the description**

- **MATSUBARA A.** Design and Control of Precision Positioning and Feed Drive Systems. Morikita Publishing Co., Ltd, 2008, 163-166
- **KAKINO et al.** Measurement of an ultra-precise NC machine tool's movement performance and improvement of the machining precision by a cross grating scale. *Precision Engineering,* 1996, vol. 62 (11), 1612-1616